# EUROPEAN PATENT APPLICATION

(11) **EP 4 818 685 A1**
(43) Date of publication of application: **07.10.2026**
(21) Application number: 24897024.6
(22) Date of filing: 30.08.2024
(51) Int. Cl.: G01N 23/2206, B22F 10/14, B22F 10/18, B22F 10/25, B22F 10/28, C22C 19/05, G01N 3/42, G01N 23/203, G01N 23/2209, G01N 23/2252

(54) **AUTOMATIC EVALUATION DEVICE AND AUTOMATIC EVALUATION METHOD FOR ALLOY COMPOSITION SEARCH**

(30) Priority: 30.11.2023 JP 2023202433
(71) Applicant: National Institute for Materials Science, Tsukuba-shi, Ibaraki 305-0047 (JP)
(72) Inventor: OSADA, Toshio, Tsukuba-shi, Ibaraki 305-0047 (JP); OHMURA, Takahito, Tsukuba-shi, Ibaraki 305-0047 (JP); HARA, Toru, Tsukuba-shi, Ibaraki 305-0047 (JP); IKEDA, Ayako, Tsukuba-shi, Ibaraki 305-0047 (JP); NAKAGAWA, Eri, Tsukuba-shi, Ibaraki 305-0047 (JP); ABE, Taichi, Tsukuba-shi, Ibaraki 305-0047 (JP); KOHATA, Takuma, Tsukuba-shi, Ibaraki 305-0047 (JP); HOEFLER, Thomas, Tsukuba-shi, Ibaraki 305-0047 (JP)
(74) Representative: Graf von Stosch Patentanwaltsgesellschaft mbH
(86) International application number: PCT/JP2024/031218
(87) International publication number: WO 2025/115333

(57) **Abstract**

For alloy composition search which enables automatic and high-speed evaluation regarding a plurality of evaluation items between evaluation devices, an automatic evaluation device (1000) includes a nanoindentation tester (50) which measures a mechanical property on the basis of the shape of an indenter mark, a mechanical property distribution storage section (120) which stores therein the distribution of the mechanical property, a measurement instrument link controller (110) which controls a measurement operation performed with respect to a measurement target specimen by a measurement instrument, a measurement data storage section (130) which stores therein measurement data from the measurement instrument, and a post-processing section (200) which computes physical property data that corresponds to the measurement data.

## Description

### Technical Field

The present invention relates to an automatic evaluation device and an automatic evaluation method which are for alloy composition search and which are suitable for use in prediction of performance in the field of structural materials. The present invention particularly relates to an automatic evaluation device and an automatic evaluation method which are for alloy composition search and which employ an automatic high-throughput evaluation technique for a composition-process-structure-property database that is for achieving significant enhancement of accuracy and expansion of the range of prediction.

### Background Art

Speeding up and advancing prediction techniques including numerical simulations regarding phase diagrams, structures, and properties are extremely important technical elements in shortening a period for developing and socially implementing materials. Examples of prediction in which a physical phenomenon and an empirical formula are utilized and which contributed to creation of a new material include an alloy design program [Non-Patent Literature 1] which was developed by the applicants of the present application, and a Ni-based single crystal superalloy (TMS alloy) which was created with assistance of the result of prediction was actually mounted on an aircraft engine as a turbine blade. In addition, prediction techniques are also widely utilized for improvement of process conditions. As a typical example, there is software (JMatPro) [Non-Patent Literature 2] which was developed by Sente Software in the U.K. and which predicts, from chemical components of an alloy and structural information that pertains to the alloy, strain rate-dependent physical and thermodynamic physical property values and mechanical physical property values, and the software greatly contributes to determination of process conditions in casting, heat treatment, forging, and the like in industrial sites. In addition, many process-structure-property prediction programs [Non-Patent Literatures 3 and 4] have been developed. Furthermore, due to recent progress in AI and machine learning technologies, it will be possible to further shorten time required from development of a material to practical application of the material.

On the other hand, also in prediction in which a physical phenomenon and an empirical formula are utilized or in which machine learning is used, the accuracy and range of the prediction are determined by the quality and quantity of an experimentally obtained material database. In other words, in order to optimize the process of searching, by prediction, for an alloy composition that is truly capable of being socially implemented, it is essential to obtain a wide-ranging and highly accurate experimental data group. Meanwhile, in the field of structural material development, a large-scale database referred to as big data does not exist, and heretofore, construction of a database has been performed by researchers and engineers through steady experiments over a long period. For example, in alloy design and process optimization for a Ni-based superalloy having a γ-γ' two-phase structure, it is essential to obtain accurate phase diagrams, ascertain structure formation behavior at each process temperature and time, and obtain a structure and high-temperature strength property database and a creep-fatigue database, each corresponding to countless combinations of elements in a system containing more than 10 elements, such as Ni-Cr-CoW-Mo-Al-Ti-Ta-Hf-Re-Ru. Generally, until one candidate alloy is socially implemented, a trial-and-error time spanning several decades, many experiments, and huge development funds are required. Under such circumstances, development of a high-throughput evaluation system which includes a technique and a device group for obtaining experimental data at high speed (high-throughput) has become increasingly important in recent years.

### <Compositionally graded material technology>

As a technique of evaluating experimental data at high throughput for creation of a phase diagram, an evaluation technique in which a compositionally graded material and a diffusion couple method or a Bridgman method are used has been proposed. This is an evaluation technique of obtaining a phase diagram and property information which pertain to countless alloy compositions, by evaluating the structure and property of a specimen which has a large compositional gradient within one sample. Note, here, that the diffusion couple method is a technique of creating a compositional gradient within one sample by superposing alloy or pure metal plates that respectively have different compositions and causing an interdiffusion reaction at high temperature [Non-Patent Literature 5].

Note also that the Bridgman method is a method of utilizing the difference in composition of a multi-component alloy between initial solidification and final solidification thereof and realizing a large compositional gradient within one sample by slowly unidirectionally solidifying the multi-component alloy [Non-Patent Literature 6]. In the Bridgman method, solidification of metal is utilized, unlike the diffusion couple method. Therefore, the Bridgman method has the feature that a large compositional gradient can be realized also with respect to heavy elements, such as Re, W, Mo, and Ta, which generally have slow diffusion rates and which are utilized to strengthen advanced Ni-based superalloys.

### <High-throughput evaluation technique>

As a method for evaluating the dynamic property of such a compositionally graded material, evaluation in which a nanoindentation is utilized is effective. Ikeda et al. [Non-Patent Literature 6] heat-treats a compositionally graded specimen of a Ni-based superalloy at a given aging temperature for given aging time, subsequently analyzes the composition thereof with use of an electron probe micro analyzer (EPMA) device, thereafter observes crystal orientation and γ' precipitate particles with use of a field emission-scanning electron microscope (FE-SEM) device provided with electron backscatter diffraction (EBSD), and then obtains a Young's modulus and hardness, which are mechanical properties, in a room-temperature nanoindentation device. Thereby, Ikeda et al. have succeeded in constructing a composition-structure-property database with respect to an alloy which has countless compositions and which has been heat-treated at a certain aging temperature.

### Citation List

### [Non-patent Literature]

[Non-patent Literature 1]
   H. Harada, H. Murakami, Design of Ni-base superalloys, in: T. Saito (Ed.), Computational Materials Design, Springer-Verlag, Berlin, 1999, pp. 39-70,
[Non-patent Literature 2]
   Shuya Kijima, "Solidification Properties Calculation of Material Properties Calculation Software JMatPro", Journal of Japan Foundry Society, Vol. 86, pp. 951-956 (2014)
[Non-patent Literature 3]
   T. Osada et al., Virtual heat treatment for g-g' two-phase NI-Al alloy on the Materials Integration System, Materials & Design 226 (2023) 111631
[Non-patent Literature 4]
   L. Wu et al. The temperature dependence of strengthening mechanisms in Ni based superalloys: A newly re-defined cuboidal model and its implications for strength design, Journal of the Alloys and Compounds, 931 (2023) 167508.
[Non-patent Literature 5]
   K. Goto et al., High-throughput evaluation of stress-strain relationships in Ni-Co-Cr ternary systems via indentation testing of diffusion couples, 910 (2022) 164868
[Non-patent Literature 6]
   A. Ikeda et al. High-throughput mapping method for mechanical properties oxidation resistance, and phase stability in Ni-based superalloys using composition-graded unidirectional solidified alloys, Scripta Materialia, 193 (2021) 91-96
[Non-patent Literature 7]
   K. Goto et al., "Inverse estimation approach for elastoplastic properties using the load-displacement curve and pile-up topography of a single Berkovich indentation", Materials and Design, 194 (2020) 108925

### Summary of Invention

### Technical Problem

However, in the method which is disclosed in Non-patent Literature 6 and which is for evaluating the dynamic property of a compositionally graded material, transfer between an EPMA, an FE-SEM, and a nanoindentation device requires alignment on the order of several millimeters each time. Thus, there is the problem that much time, labor, and know-how are required at the time of setting of a specimen between these devices. Moreover, there is also the problem that much time and human labor are required to post-process, by means of analysis software, countless pieces of data obtained by various devices. Furthermore, the dynamic property that can be obtained is hardness, and there is also the problem that a stress-strain curve and a high-temperature stress-strain curve, which are generally required when an alloy is designed, cannot be obtained. In addition, with respect to a compositionally graded specimen, heat treatment can be performed with respect to that one compositionally graded material only under one condition, and the process range is limited.

On the other hand, the problem regarding obtainment of dynamic properties can be solved to some extent by also using a method of estimating a stress-strain curve through inverse analysis. Goto et al. [Non-patent Literature 7] propose a method of, by utilizing the result of simulation performed by a finite element method, estimating, from a load-displacement curve and the shape of an indentation which are obtained by a nanoindentation method, a stress-strain curve of a position at which indentation has been performed. By using this inverse analysis method in combination with the method disclosed in Non-patent Literature 6, it becomes possible to obtain a phase diagram-structure-stress strain curve database from one or a limited number of compositionally graded specimens. Here, in order to estimate the stress-strain curve, information pertaining to the shape of the indentation is required. Goto et al. obtain, after the indentation, the shape of the indentation by AFM in which the same indenter is utilized.

However, in the method which is disclosed in Non-patent Literature 7 and which is for estimating a stress-strain curve by inverse analysis, obtainment of the shape of an indentation with use of an AFM requires time. Moreover, the tip of an indenter wears out, which affects the accuracy of measurement of a stress-strain curve. Therefore, there is the problem that it is difficult to obtain a large amount of dynamic data at high speed.

As described above, there are several elemental techniques regarding high-throughput evaluation of databases necessary in the field of structural materials. However, since there are still many human tasks and much know-how between evaluation devices, it is essential to develop an evaluation system and post-processing software which enable automatic and high-speed evaluation regarding a plurality of evaluation items.

Existing high-throughput evaluation techniques have the following temporal and technical problems (1) through (5):
(1) a temporal and technical problem that relates to transfer and setting between an EPMA, an FE-SEM, and a nanoindentation device;
(2) a temporal and technical problem that result from a method for obtaining the shape of an indentation and that relates to estimation of a high-temperature stress-strain curve;
(3) a temporal and technical problem that relates to post-processing of big data with use of analysis software;
(4) a technical problem that a process range is limited; and
(5) since a human conducts an experiment in the first place, there is a limit to working hours and a human cost is enormous.

The present invention has solved the above problems of the conventional techniques, and has an object of providing an automatic evaluation device for alloy composition search that enables automatic and high-speed evaluation regarding a plurality of evaluation items between evaluation devices.

### Solution to Problem

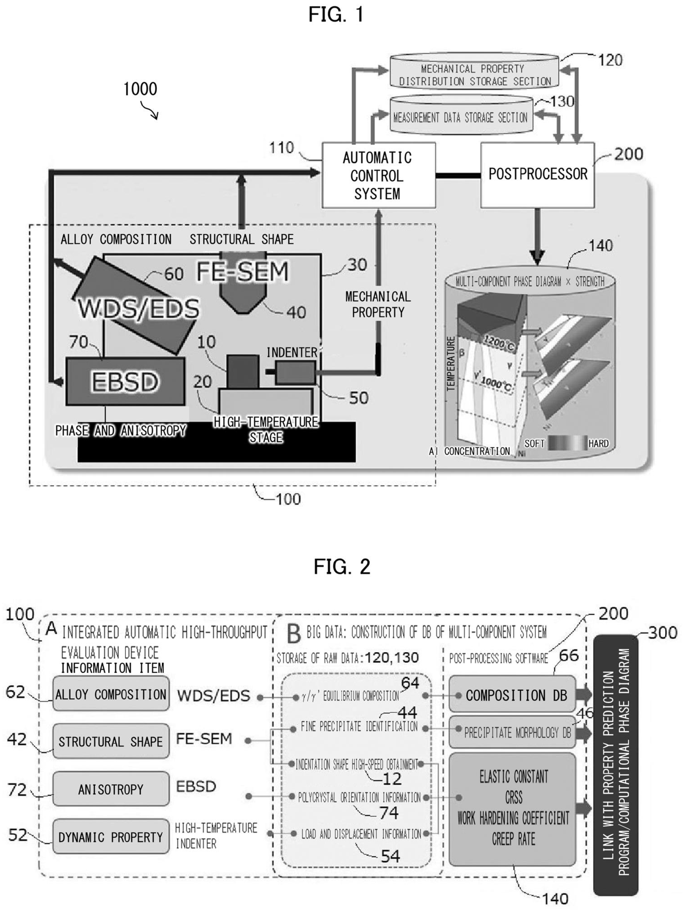

As shown in, for example, Fig. 1, an automatic evaluation device for alloy composition search in accordance with an embodiment of the present invention includes: a specimen holding section 20 which holds a measurement target specimen 10 in a given posture; a mechanical property distribution storage section 120 which stores therein distribution of a mechanical property of the measurement target specimen 10 in association with a position of an indenter mark that has been formed on the measurement target specimen 10 by a nanoindentation tester, the mechanical property having been measured by the nanoindentation tester; a housing section 30 which holds at least one type of measurement instrument among measurement instruments including a wavelength-dispersive X-ray spectrometer or an energy-dispersive X-ray spectrometer that analyzes compositional elements of an alloy, a field emission-scanning electron microscope that measures a structural shape of the alloy, and an electron backscatter diffraction device that analyzes orientation distribution, texture, or crystal phase distribution of crystal grains; a measurement instrument link controller 110 which controls a measurement operation performed with respect to the measurement target specimen by the at least one type of measurement instrument that is attached to the housing section 30, among the measurement instruments including the wavelength-dispersive X-ray spectrometer or the energy-dispersive X-ray spectrometer that analyzes the compositional elements of the alloy, the field emission-scanning electron microscope that measures the structural shape of the alloy, and the electron backscatter diffraction device that analyzes the orientation distribution, texture, or crystal phase distribution of the crystal grains; a measurement data storage section 130 which stores therein, as measurement data that has been obtained by the measurement instruments and that pertains to the measurement target specimen, measurement data from the measurement instruments in association with the position of the indenter mark that has been formed on the measurement target specimen 10; and a post-processing section 200 which computes physical property data that corresponds to the measurement data from the measurement instruments.

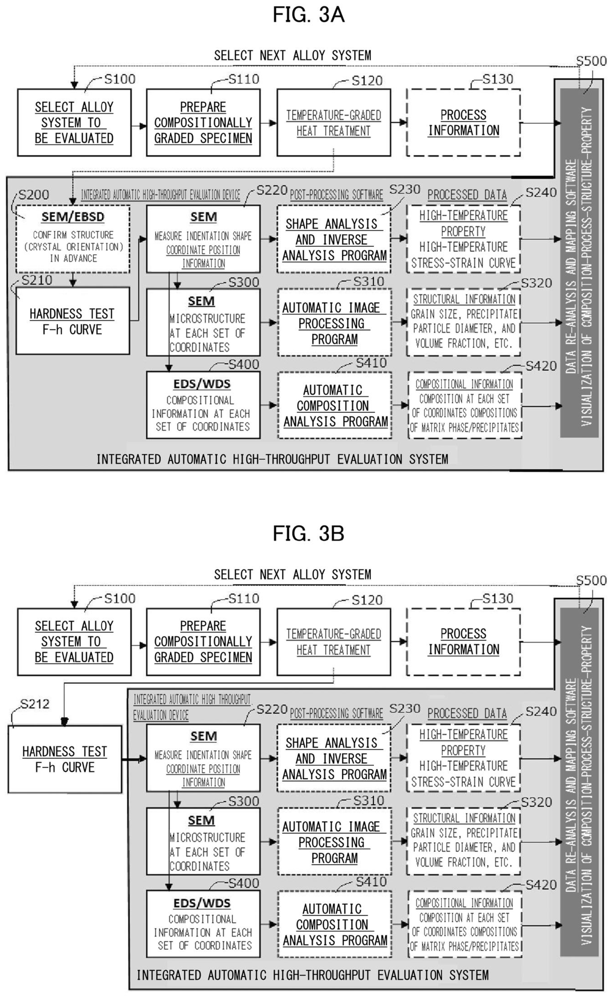

As shown in, for example, Fig. 3A, an automatic evaluation method for alloy composition search in accordance with an embodiment of the present invention includes: performing scanning electron microscope observation or electron backscatter diffraction observation with respect to a measurement target specimen 10 (S200); selecting a position for dynamic measurement on the basis of a structure, a phase, or a crystal structure on an obtained image (S220); arbitrarily storing, in a composition ratio storage section, a designed composition ratio of compositional elements that is at the position for the dynamic measurement (S400); performing a high-temperature hardness test (nanoindentation measurement) at a predetermined given temperature at the position that is on the measurement target specimen 10 and that has been selected for the dynamic measurement (S210); performing indentation shape measurement with respect to the position for the dynamic measurement (S220), and computing a high-temperature stress-strain curve of the measurement target specimen 10 (S240); and on the basis of the structure, the phase, or the crystal structure of an indenter mark on the measurement target specimen 10, arbitrarily associating, with data that pertains to the high-temperature stress-strain curve, the position that has been observed in the scanning electron microscope observation or the electron backscatter diffraction observation of the measurement target specimen 10 (S500).

As shown in, for example, Fig. 3B, an automatic evaluation method for alloy composition search in accordance with an embodiment of the present invention includes: performing indentation shape measurement at a position which is on a measurement target specimen 10 that has been subjected to a high-temperature hardness test (nanoindentation measurement) at a predetermined given temperature by a nanoindentation tester and at which an indenter mark is formed (S220); computing a high-temperature stress-strain curve of the measurement target specimen 10 on the basis of a result of the indentation shape measurement (S240); performing scanning electron microscope observation or electron backscatter diffraction observation with respect to the measurement target specimen 10 (S300); with use of the indenter mark on the measurement target specimen 10 on an obtained image, selecting, as a position for dynamic measurement, a detailed position at which scanning electron microscope observation or electron backscatter diffraction observation is to be performed, and measuring a structure, a phase, or a crystal structure at the detailed position by the scanning electron microscope observation or the electron backscatter diffraction observation (S320); and on the basis of the structure, the phase, or the crystal structure of the indenter mark on the measurement target specimen 10, associating, with data which has been obtained by the dynamic measurement, the position which is on the measurement target specimen 10 and at which the scanning electron microscope observation or the electron backscatter diffraction observation has been performed (S500).

### Advantageous Effects of Invention

In an automatic evaluation device for alloy composition search in accordance with an embodiment of the present invention, a holding device for a compositionally graded specimen is provided, for example, in a field emission-scanning electron microscope, and a housing is provided which holds constant the positional relationship between high-temperature nanoindentation and at least one of a wavelength-dispersive X-ray spectrometer or an energy-dispersive X-ray spectrometer and electron backscatter diffraction. Therefore, transfer and precise alignment of the compositionally graded specimen between the EPMA, the field emission-scanning electron microscope, and the nanoindentation device are unnecessary, and adjustment of setting of the specimen between these devices is simple.

### Brief Description of Drawings

Fig. 1 is a functional block diagram schematically showing an integrated automatic high-throughput evaluation system serving as an automatic evaluation device for alloy composition search in accordance with an embodiment of the present invention.
Fig. 2 is a diagram showing various incidental facilities of the integrated automatic high-throughput evaluation system, raw measurement data obtained, and a data flow to post-processing software.
Fig. 3A is a diagram showing an example of an automatic experiment and data analysis flow in which the integrated automatic high-throughput evaluation system is utilized, and shows a case where a nanoindentation tester is embedded.
Fig. 3B is a diagram showing an example of the automatic experiment and data analysis flow in which the integrated automatic high-throughput evaluation system is utilized, and shows a case where the nanoindentation tester is not embedded.
Fig. 4 is a diagram showing a speeding-up effect brought about by the integrated automatic high-throughput evaluation system.
Fig. 5 is a diagram showing an example of a method for designing a compositionally graded diffusion couple, and (a) is a Ni-Al phase diagram, (b) is an external view of a compositionally graded single-crystal alloy, and (c) is a perspective view of the configuration of the compositionally graded single-crystal alloy.
Fig. 6 is a diagram showing a temperature-graded heat treatment device and the appearance of a compositionally graded and temperature-graded test piece which has been heat-treated.
Fig. 7A is a diagram showing an example of the result of performing nanoindentation (load-displacement curves) at 500 points on a compositionally graded and temperature-graded single-crystal specimen of a Ni-Al binary system.
Fig. 7B is a diagram showing a structure-hardness-Young's modulus map of the compositionally graded and temperature-graded single-crystal specimen of the Ni-Al binary system, the structure-hardness-Young's modulus map having been obtained by performing tests of which the number is N=10000.
Fig. 8A is a diagram showing the result of performing automatic indentation load-depth measurement (in the case of aging time=3 hours) with respect to a temperature-graded single-crystal specimen of a Ni-Co-Cr-W-Mo-Ti-Al-Ta-Nb 9-component superalloy.
Fig. 8B shows an example in which coordinate information pertaining to the temperature-graded single-crystal specimen of the Ni-Co-Cr-W-Mo-Ti-Al-Ta-Nb 9-component superalloy at the time of indentation measurement was passed to an SEM and the shapes of indentations were automatically obtained at respective coordinate positions.
Fig. 8C is a diagram showing the result of performing automatic microstructure measurement (in the case of aging time=3 hours) with respect to the temperature-graded single-crystal specimen of the Ni-Co-Cr-W-Mo-Ti-Al-Ta-Nb 9-component superalloy.
Fig. 8D is a diagram showing the result of analyzing (in the case of aging time=3 hours) the hardness H (GPa) ((a) of Fig. 8D), the reduced elastic modulus Er (GPa) ((b) of Fig. 8D), and the pile-up height Hp ((c) of Fig. 8D) of the temperature-graded single-crystal specimen of the Ni-Co-Cr-W-Mo-Ti-Al-Ta-Nb 9-component superalloy, the pile-up height having been analyzed with use of a shape analysis program (S230 in Fig. 3B) from indentation height information in Fig. 8B.
Fig. 8E the yield strength σ_{Y} (MPa) ((a) of Fig. 8E), the work hardening rate B (MPa) ((b) of Fig. 8E), all obtained stress-strain ((c) of Fig. 8E) of the temperature-graded single-crystal specimen of the Ni-Co-Cr-W-Mo-Ti-Al-Ta-Nb 9-component superalloy which were analyzed with use of an inverse analysis program (S230 in Fig. 3B).
Fig. 8F is a diagram showing the volume fraction f_{V} of aging precipitates and cooling precipitates ((a) of Fig. 8F), a precipitate size ((b) of Fig. 8F), and a precipitate shape ((c) of

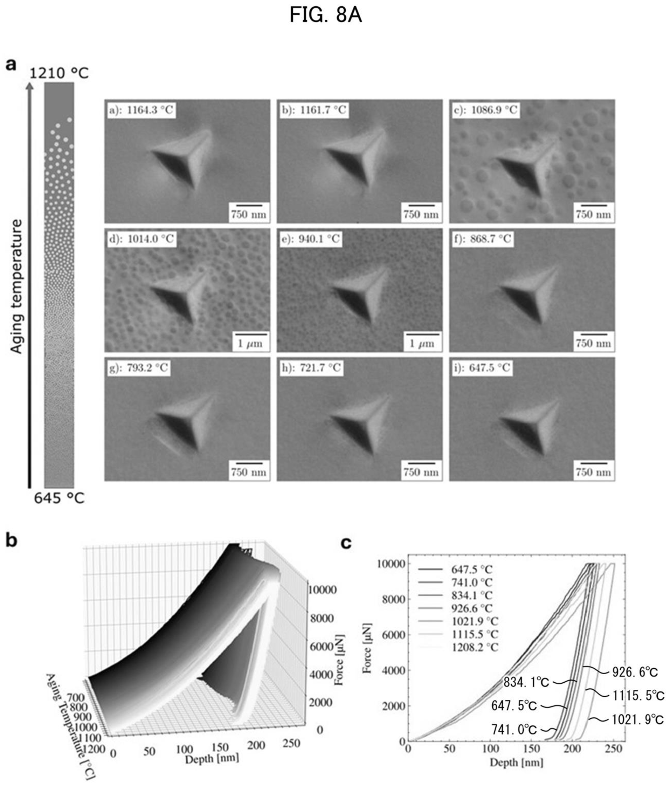

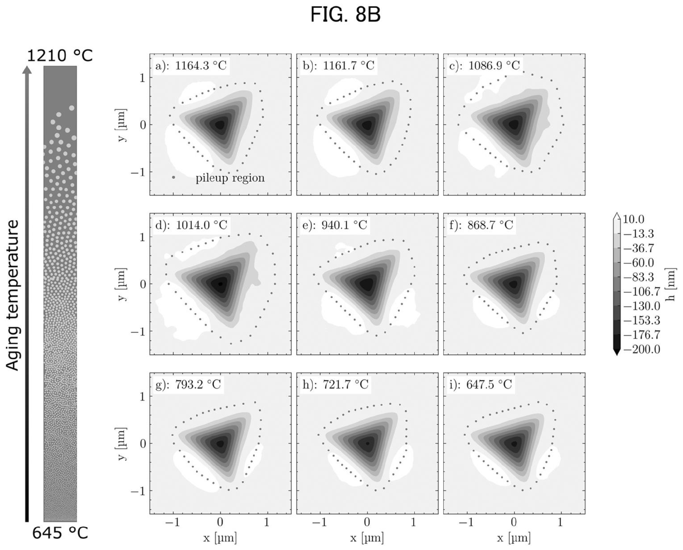

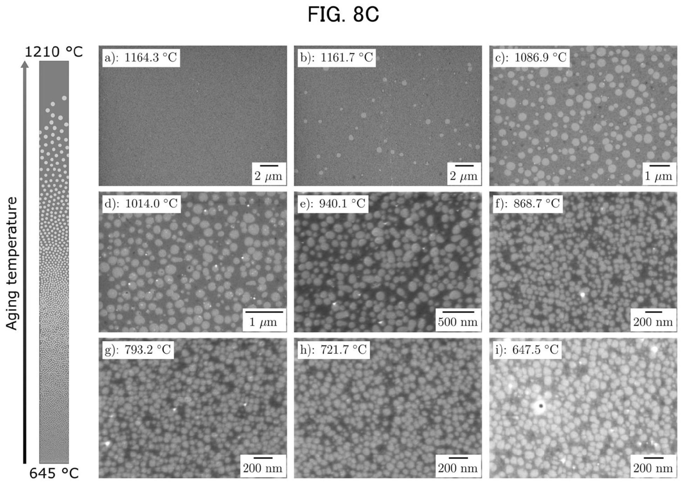

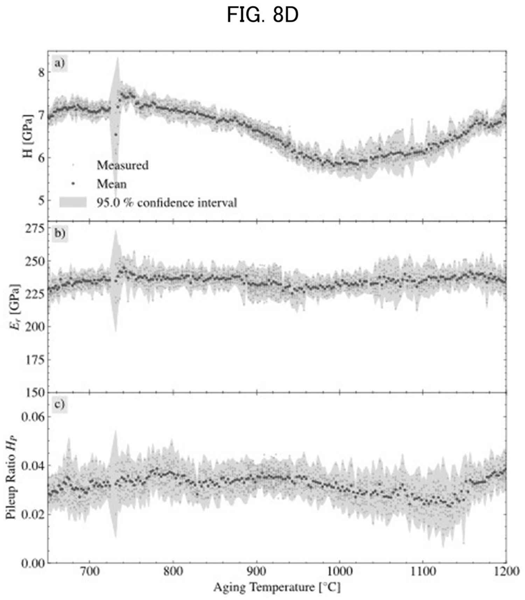

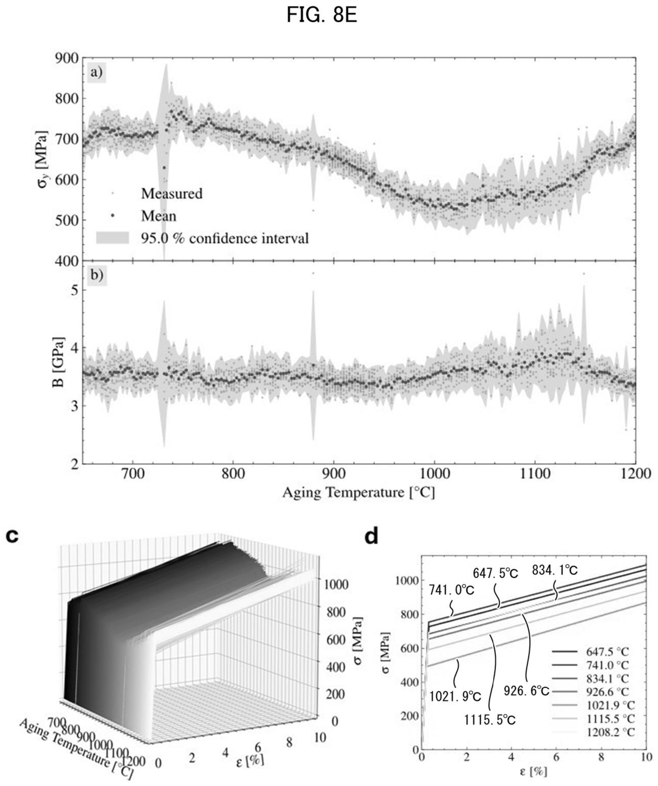

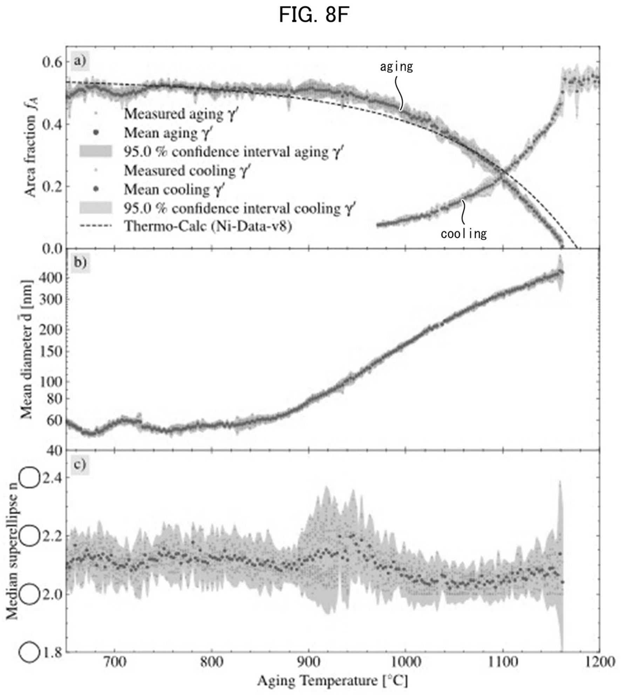

Fig. 8F) (in the case of aging time=3 hours) which were analyzed with use of an automatic image processing program (S310 in Fig. 3B) from SEM image information pertaining to the temperature-graded single-crystal specimen of the Ni-Co-Cr-W-Mo-Ti-Al-Ta-Nb 9-component superalloy.

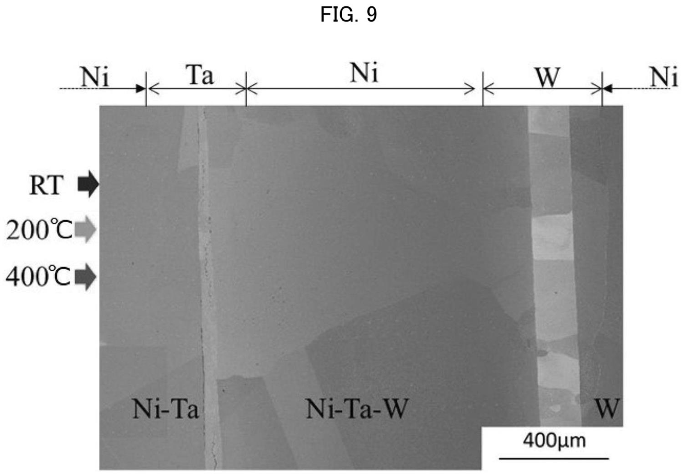

Fig. 9 is a diagram showing the appearance of a Ni-W-Ta compositionally graded material and a state of indentation.

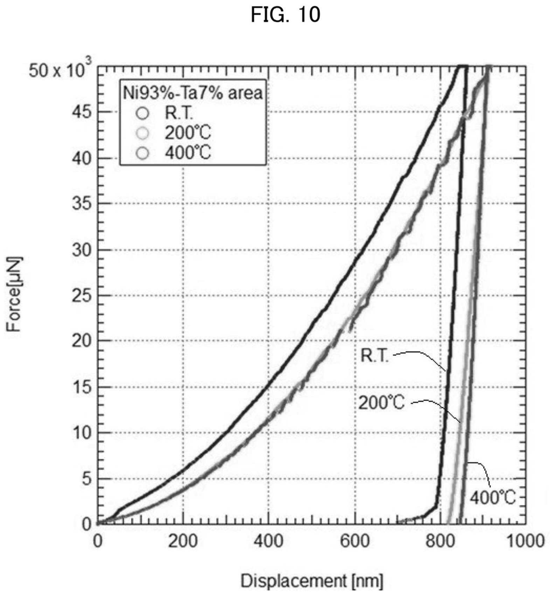

Fig. 10 is a diagram showing an example of the result of high-temperature nanoindentation (example: Ni 93%-Ta 7% region) on a Ni-W-Ta compositionally graded specimen.

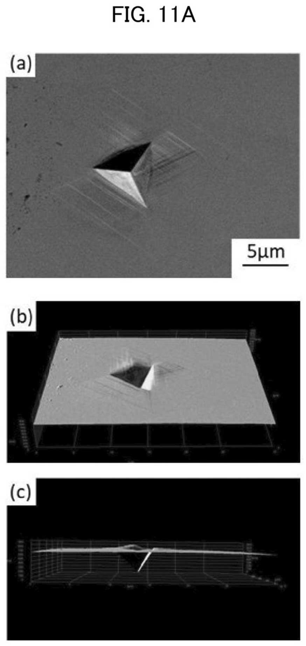

Fig. 11A is a diagram showing examples of automatic measurement of the shape of an indentation and an obtained high-temperature stress-strain diagram. (a) shows an SEM image, and (b) and (c) each show the three-dimensional shape of the indentation, the three-dimensional shape having been obtained with use of an SEM.

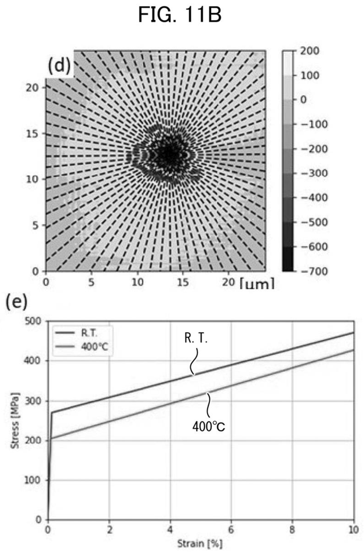

Fig. 11B is a diagram showing examples of the automatic measurement of the shape of the indentation and an obtained high-temperature stress-strain diagram. (d) shows an example of an output from a pile-up height measurement program, and (e) shows high-temperature stress-strain curves (example: Ni 93%-Ta 7% region) estimated from load-displacement curves and the shape of the indentation.

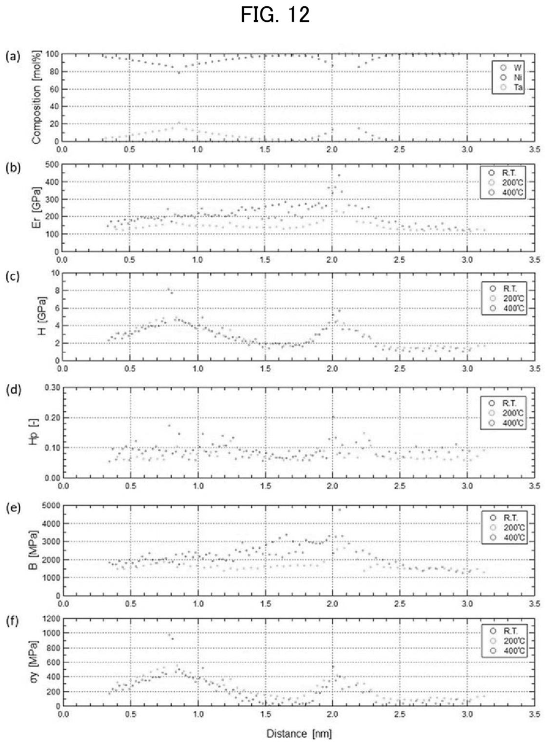

Fig. 12 is a diagram showing an example of the result of automatic measurement (example of the Ni-W-Ta compositionally graded material) performed with use of the integrated automatic high-throughput evaluation system. (a) shows Ni, W, and Ta concentrations at each measurement point, (b) shows a Young's modulus at each measurement point, (c) shows hardness at each measurement point, (d) shows pile-up height at each measurement point, (e) shows a work effect coefficient at each measurement point, and (f) shows yield stress at each measurement point.

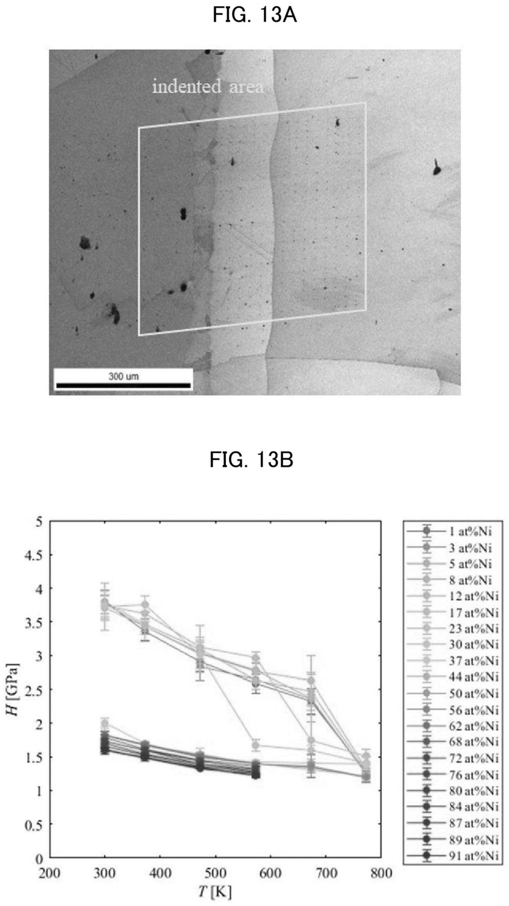

Fig. 13A is a diagram showing an example of the result of automatic measurement (example of a Ni-Co compositionally graded material) performed with use of the integrated automatic high-throughput evaluation system, and shows an SEM photograph of the compositionally graded specimen.
Fig. 13B is a diagram showing an example of the result of the automatic measurement (example of the Ni-Co compositionally graded material) performed with use of the integrated automatic high-throughput evaluation system, and shows the temperature dependence of hardness in each composition.

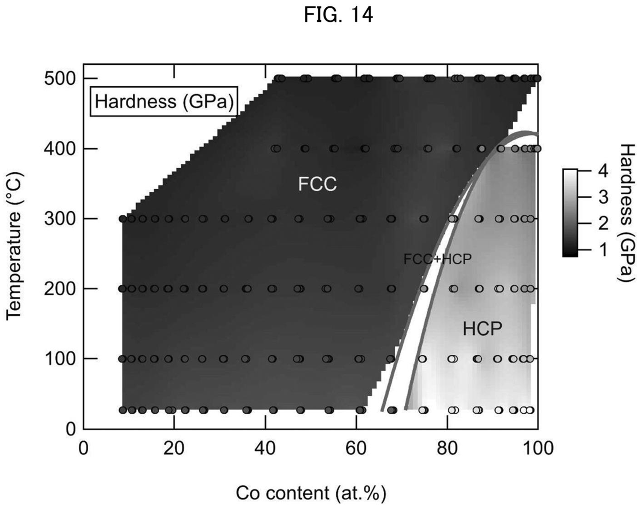

Fig. 14 is a diagram showing an example of the result of the automatic measurement (example of the Ni-Co compositionally graded material) performed with use of the integrated automatic high-throughput evaluation system, and shows the comparison between a hardness map and a phase diagram at each composition and each temperature.

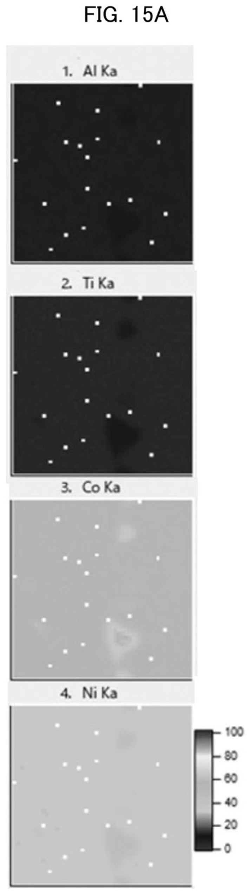

Fig. 15A is a diagram displaying respective EPMA maps of elements of a Ni-Co-Al-Ti quaternary alloy.

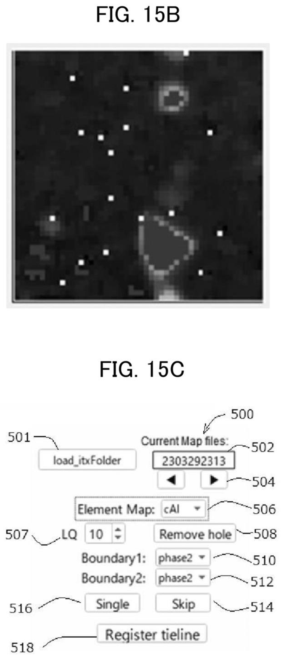

Fig. 15B is an SEM photograph showing crystal grains to be analyzed of the Ni-Co-Al-Ti quaternary alloy and also showing a region targeted for area analysis by an EPMA.
Fig. 15C is a diagram showing tie-line data setting conditions for the automatic composition analysis program to determine a γ-γ' composition necessary for a phase diagram DB.

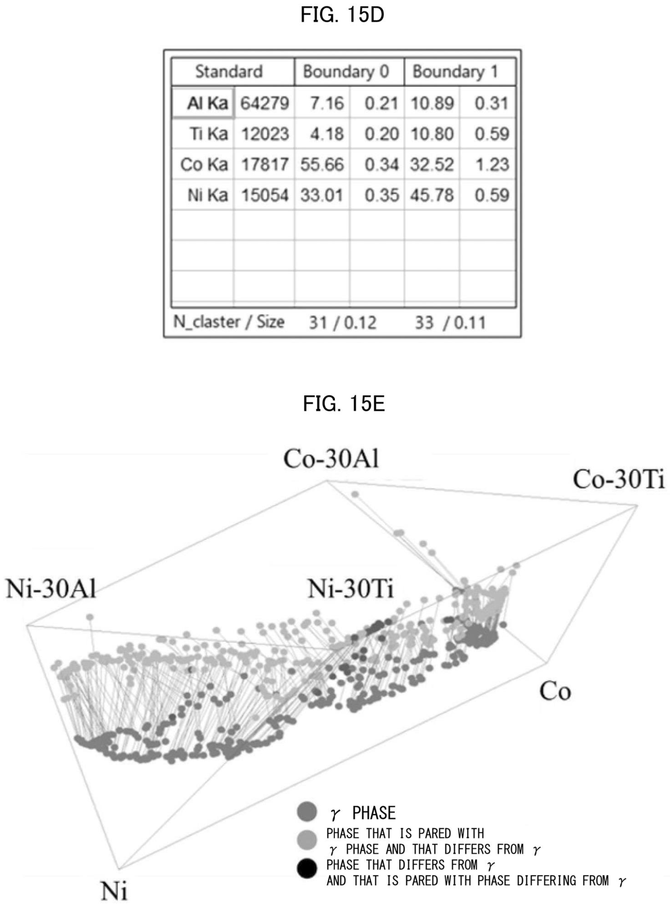

Fig. 15D is a diagram showing the result of analyzing the compositions of γ and γ' phases in the region targeted for the area analysis by the EPMA.
Fig. 15E is a diagram showing tie-line data pertaining to the Ni-Co-Al-Ti quaternary alloy.

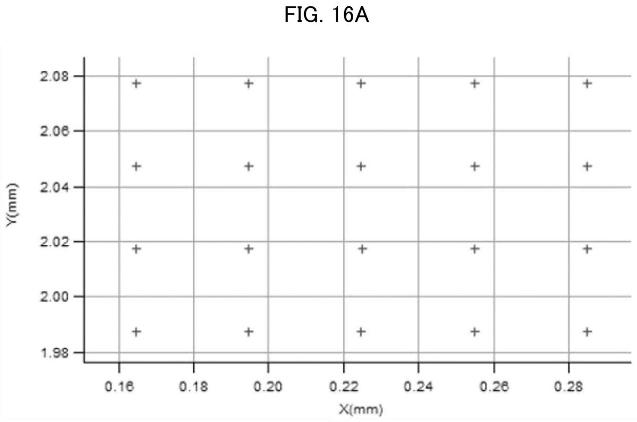

Fig. 16A is a diagram displaying, on a position map of a measurement target specimen, markers corresponding to respective measurement points.

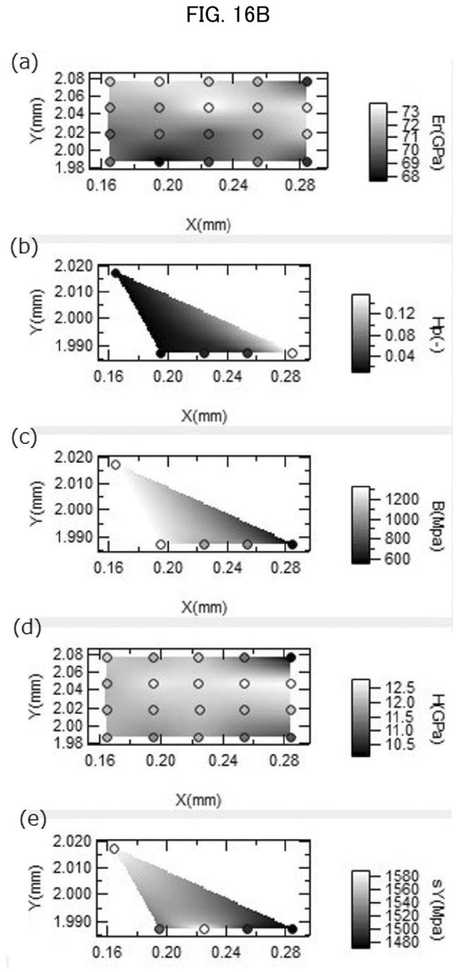

Fig. 16B is a diagram displaying, on phase diagrams or position maps, mechanical properties such as elastic modulus, hardness, pile-up height, yield stress, and a work effect coefficient at each measurement point on the measurement target specimen.

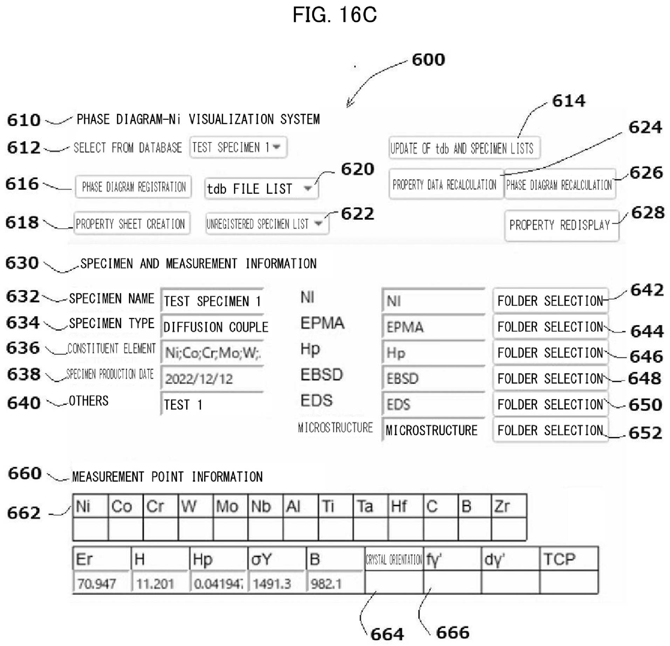

Fig. 16C is a diagram showing that property values at an arbitrary point selected from among the measurement points in Fig. 16A on the measurement target specimen that has been subjected to data re-analysis and mapping software are displayed.

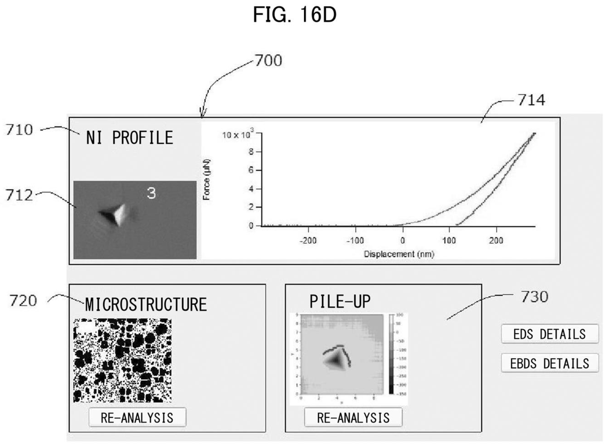

Fig. 16D is a diagram displaying raw data pertaining to a load-displacement curve, a microstructure, and pile-up analysis which have been obtained by nanoindentation.

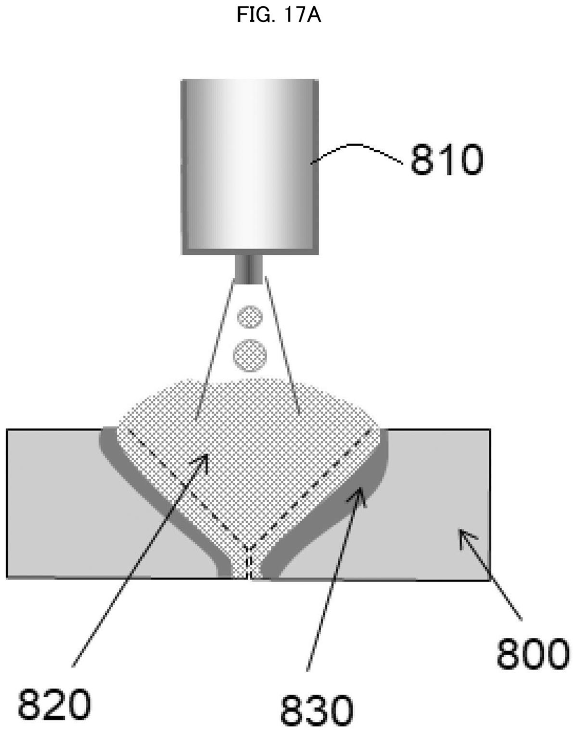

Fig. 17A is a cross-sectional view of a main part of a welded portion that is an example in which a measurement target specimen exhibits a compositional gradient and/or a structural variation, and shows a welded portion of a turbine disk material made of a nickel-based superalloy.

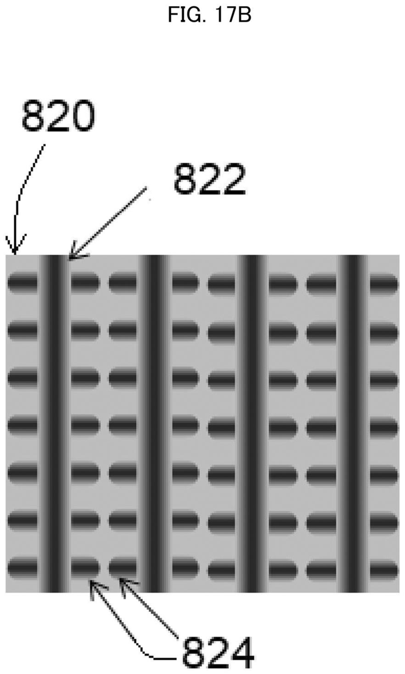

Fig. 17B is a dendrite solidification structure diagram of weld metal shown in Fig. 17A.

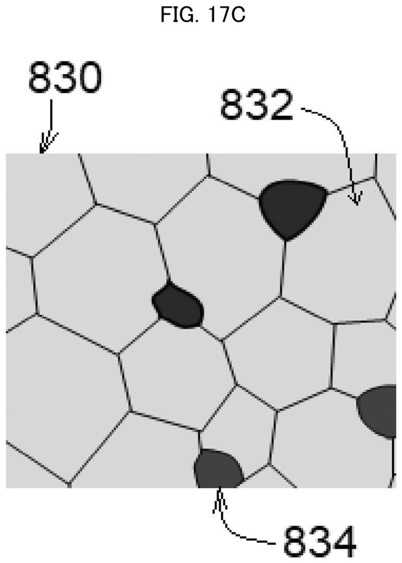

Fig. 17C is a structure diagram of a heat-affected zone (HAZ) shown in Fig. 17A.

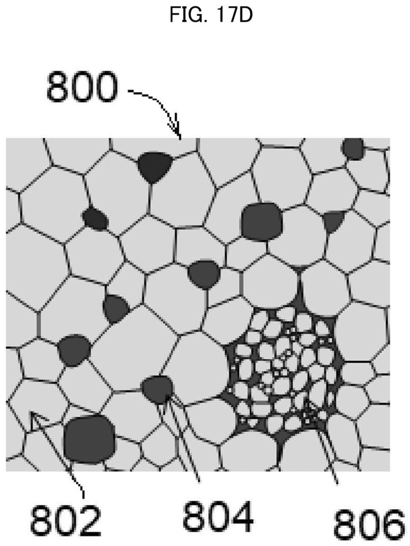

Fig. 17D is a structure diagram of a base metal shown in Fig. 17A.

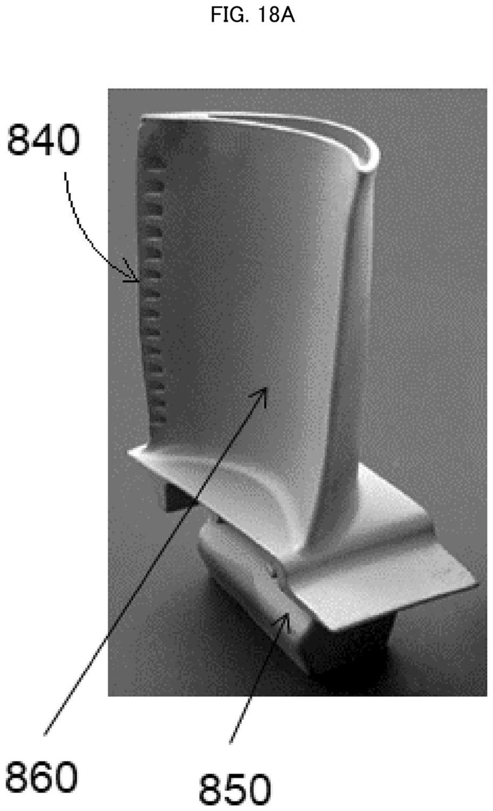

Fig. 18A is an overall perspective view of a turbine blade that is an example in which a measurement target specimen shows a compositional gradient and/or a structural variation, and shows a thick wall portion and a thin wall portion.

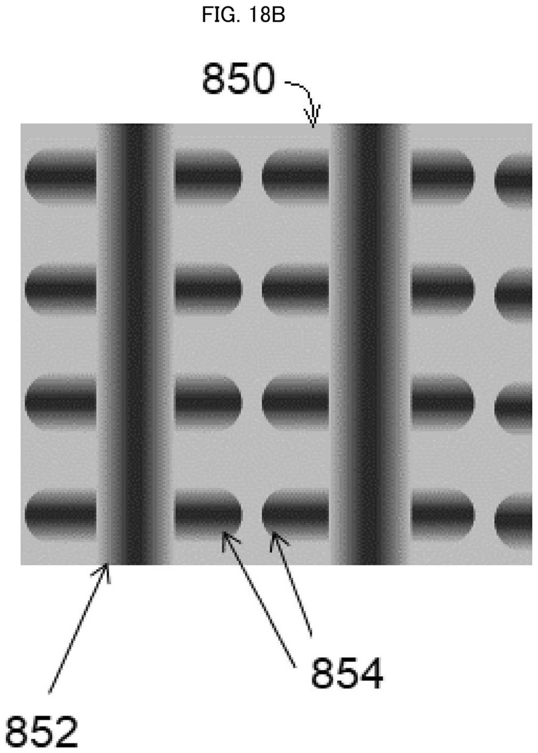

Fig. 18B is a dendrite solidification structure diagram of the thick wall portion shown in Fig. 18A.

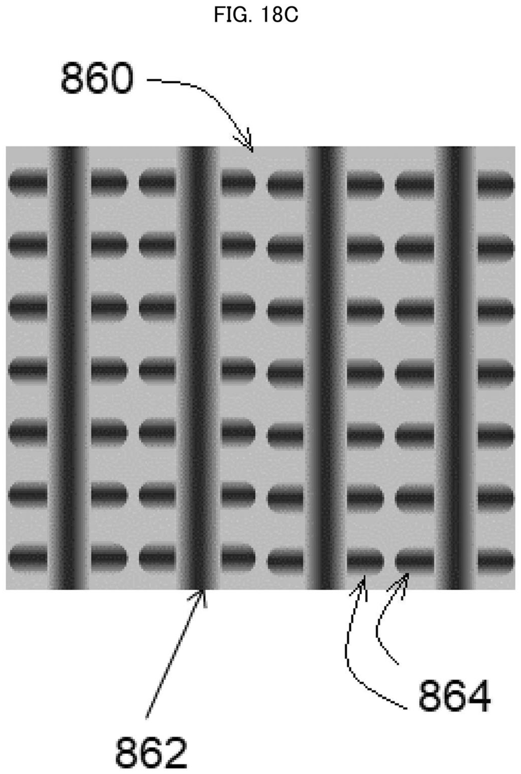

Fig. 18C is a dendrite solidification structure diagram of the thin wall portion shown in Fig. 18A.

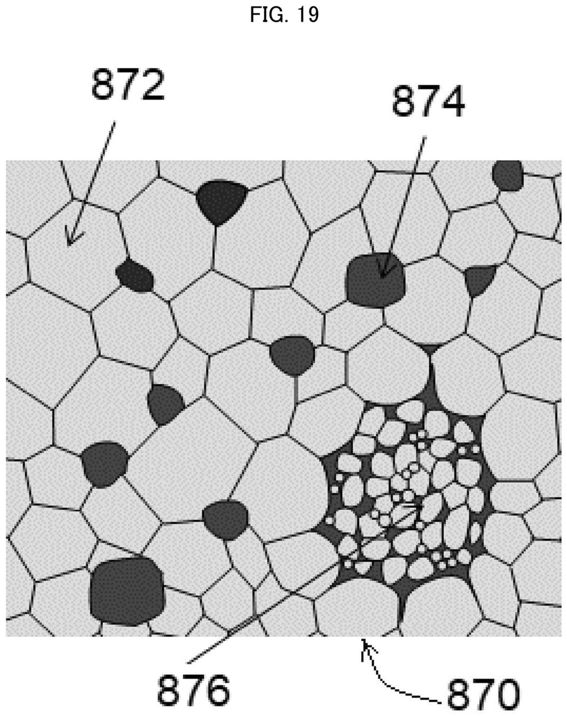

Fig. 19 is a structure diagram of a multi-phase polycrystalline structure material that is an example in which a measurement target specimen shows a compositional gradient and/or a structural variation.

### Description of Embodiments

As a means for solving the above problems, the inventors of the present invention have conceived of an integrated automatic high-throughput evaluation system 1000 including an integrated evaluation device 100, an automatic control system 110, and a postprocessor (hereinafter also referred to as "post-processing section") 200 which executes post-processing software, as shown in Fig. 1. In a conventional evaluation system, measurement is independently performed by an EPMA, an EBSD, an FE-SEM, or nanoindentation. However, an automatic evaluation device 1000 for alloy composition search in accordance with an embodiment of the present invention, which is an example of the integrated automatic high-throughput evaluation system in accordance with an embodiment of the present invention, has a mechanism of comprehensively automatically evaluating the alloy composition, phase and orientation information, structural shape information, or dynamic property of a compositionally graded specimen, by having the following configuration. That is, an integrated evaluation device 100 includes a high-temperature nanoindentation and at least one of a wavelength-dispersive X-ray spectrometer or an energy-dispersive X-ray spectrometer and an electron backscatter diffraction device, the at least one of the wavelength-dispersive X-ray spectrometer or the energy-dispersive X-ray spectrometer and the electron backscatter diffraction device being installed in a field emission-scanning electron microscope. The integrated evaluation device 100 is automatically controlled by an automatic control system 110 that is operated by means of external software. Thus, in the integrated evaluation device 100, a holding device for a compositionally graded specimen is provided, for example, in the field emission-scanning electron microscope, and a housing is provided which holds constant the positional relationship between the high-temperature nanoindentation and at least one of the wavelength-dispersive X-ray spectrometer or the energy-dispersive X-ray spectrometer and the electron backscatter diffraction device.

Furthermore, as shown in Fig. 2, the post-processing section 200 which executes the post-processing software converts obtained raw data 64, 44, 12, 74, and 54 into information which is truly needed by a materials engineering expert during alloy design, such as phase diagram information, precipitate shape information, and a high-temperature mechanical property (elastic constant, stress-strain curve, yield stress, work hardening coefficient, or creep deformation rate). The field emission-scanning electron microscope is configured to enable evaluation of the shape of an indentation in a non-contact manner at high speed and with high accuracy.

<1> As shown in, for example, Fig. 1, the automatic evaluation device 1000 for alloy composition search in accordance with an embodiment of the present invention includes: a specimen holding section 20 which holds a measurement target specimen 10 in a given posture; a mechanical property distribution storage section 120 which stores therein distribution of a mechanical property of the measurement target specimen 10 in association with a position of an indenter mark that has been formed on the measurement target specimen 10 by a nanoindentation tester, the mechanical property having been measured by the nanoindentation tester; a housing section 30 which holds at least one type of measurement instrument among measurement instruments including a wavelength-dispersive X-ray spectrometer or an energy-dispersive X-ray spectrometer that analyzes compositional elements of an alloy, a field emission-scanning electron microscope that measures a structural shape of the alloy, and an electron backscatter diffraction device that analyzes orientation distribution, texture, or crystal phase distribution of crystal grains; a measurement instrument link controller 110 which controls a measurement operation performed with respect to the measurement target specimen by the at least one type of measurement instrument that is attached to the housing section 30, among the measurement instruments including the wavelength-dispersive X-ray spectrometer or the energy-dispersive X-ray spectrometer that analyzes the compositional elements of the alloy, the field emission-scanning electron microscope that measures the structural shape of the alloy, and the electron backscatter diffraction device that analyzes the orientation distribution, texture, or crystal phase distribution of the crystal grains; a measurement data storage section 130 which stores therein, as measurement data that has been obtained by the measurement instruments and that pertains to the measurement target specimen, measurement data from the measurement instruments in association with the position of the indenter mark that has been formed on the measurement target specimen 10; and a post-processing section 200 which computes physical property data that corresponds to the measurement data from the measurement instruments.
<1A> As shown in, for example, Fig. 1, an automatic evaluation device for alloy composition search in accordance with an embodiment of the present invention includes: a specimen holding section 20 which holds a measurement target specimen 10 in a given posture; a nanoindentation tester 50 which presses an indenter against the measurement target specimen 10 and which measures a mechanical property of the measurement target specimen 10 on the basis of a shape of an indenter mark; a mechanical property distribution storage section 120 which stores therein distribution of the mechanical property in association with a position of the indenter mark that has been formed on the measurement target specimen 10, the mechanical property having been measured by the nanoindentation tester 50; a housing section 30 which holds the nanoindentation tester 50 and at least one type of measurement instrument among measurement instruments including a wavelength-dispersive X-ray spectrometer or an energy-dispersive X-ray spectrometer that analyzes compositional elements of an alloy, a field emission-scanning electron microscope that measures a structural shape of the alloy, and an electron backscatter diffraction device that analyzes orientation distribution, texture, or crystal phase distribution of crystal grains; a measurement instrument link controller 110 which controls measurement operations performed with respect to the measurement target specimen by the nanoindentation tester 50 and the at least one type of measurement instrument among the measurement instruments including the wavelength-dispersive X-ray spectrometer or the energy-dispersive X-ray spectrometer that analyzes the compositional elements of the alloy, the field emission-scanning electron microscope that measures the structural shape of the alloy, and the electron backscatter diffraction device that analyzes the orientation distribution, texture, or crystal phase distribution of the crystal grains, the nanoindentation tester 50 and the at least one type of measurement instrument being attached to the housing section 30; a measurement data storage section 130 which stores therein, as measurement data that has been obtained by the measurement instruments and that pertains to the measurement target specimen, measurement data from the measurement instruments in association with the position of the indenter mark that has been formed on the measurement target specimen 10; and a post-processing section 200 which computes physical property data that corresponds to the measurement data from the measurement instruments.
<2> The automatic evaluation device for alloy composition search in accordance with an embodiment of the present invention may be such that, in <1> or <1A>, the measurement target specimen 10 is one of the following: a compositionally graded material that has a composition ratio graded between upper and lower limit values of each of compositional elements of an alloy system which is an evaluation target;
   a heat treatment temperature-graded material that has been obtained by heat-treating, in a furnace in which heat treatment temperature is distributed in a graded manner between upper and lower limit values, the compositionally graded material or, instead of the compositionally graded material, a test material which has a uniform composition;
   a heat-affected member that includes a region in which a base metal (metal, thermoplastic material, or the like) is not melted but a microstructure and a property of the measurement target specimen 10 have been changed by a welding operation or a thermal cutting operation;
   an additively manufactured metal material that has been manufactured as a metal component by dissolving metal powder for a part necessary to the metal component with use of an electron beam or a fiber laser and thereafter solidifying the metal powder; and
   a metal powder injection molding material that is obtained by adding a binder to fine metal powder which is a raw material, without melting the fine metal powder, and that is injection-molded into a molded body which is to be degreased and sintered so as to obtain a metal component.
<3> The automatic evaluation device for alloy composition search in accordance with an embodiment of the present invention may be such that, in <2>, the additively manufactured metal material is manufactured by one of the following:
   a powder bed method in which a process of (i) melting metal powder by irradiating, with a laser beam or an electron beam, a powder bed on which the metal powder is spread and (ii) solidifying the metal powder is repeated for each layer;
   a directed energy deposition method in which a manufactured article is manufactured by, while supplying powder, wire, or the like, (i) melting the powder, the wire, or the like with use of a laser or an electron beam and (ii) depositing the powder, the wire, or the like;
   a fused deposition modeling method in which metal powder is put into a thermoplastic resin, a mixture of the metal powder and the thermoplastic resin is deposited while being melted by heat, and a manufactured article that has been degreased after additive manufacturing is sintered so that the metal powder is solidified; and
   a binder jet method in which additive manufacturing is performed by ejecting a liquid binder from a nozzle onto metal powder and in which a process of lowering a build plate and spreading the metal powder again when ejection of the liquid binder and solidification of the metal powder are completed is repeated for each layer and, after additive manufacturing, sintering is performed in a high-temperature furnace or by a heater so that the liquid binder is removed.
<4> The automatic evaluation device for alloy composition search in accordance with an embodiment of the present invention may, in any one of <1> through <3> and <1A>, further include the nanoindentation tester 50 which presses an indenter against the measurement target specimen 10 and which measures the mechanical property on the basis of a shape of the indenter mark, wherein:
   the mechanical property distribution storage section 120 stores therein the distribution of the mechanical property in association with the position of the indenter mark that has been formed on the measurement target specimen 10, the mechanical property being measured by the nanoindentation tester 50;
   the housing section 30 holds the nanoindentation tester 50 and the at least one type of measurement instrument among the measurement instruments including the wavelength-dispersive X-ray spectrometer or the energy-dispersive X-ray spectrometer, the field emission-scanning electron microscope, and the electron backscatter diffraction device; and
   the measurement instrument link controller 110 controls measurement operations performed with respect to the measurement target specimen by the nanoindentation tester 50 and the at least one type of measurement instrument among the measurement instruments including the wavelength-dispersive X-ray spectrometer or the energy-dispersive X-ray spectrometer, the field emission-scanning electron microscope, and the electron backscatter diffraction device, the nanoindentation tester and the at least one type of measurement instrument being attached to the housing section.
<5> The automatic evaluation device for alloy composition search in accordance with an embodiment of the present invention may be preferably such that, in any one of <1> through <4> and <1A>, a target of alloy composition search is at least one selected from the group consisting of the compositionally graded material, the heat treatment temperature-graded material, the heat-affected member, the additively manufactured metal material, and the metal powder injection molding material, and in the measurement data storage section 130, the measurement data that pertains to the measurement target specimen is at least one type of: crystal phase equilibrium composition data 64 that corresponds to the compositional elements 62 of the alloy; fine precipitate identification data 44 and indentation shape high-speed obtainment data 12 that correspond to the structural shape 42 of the alloy; polycrystal orientation data 74 that corresponds to an anisotropy 72 of the alloy; and load and displacement information that corresponds to the mechanical property which is measured by the nanoindentation tester 50.
<6> As shown in, for example, Fig. 2, the automatic evaluation device for alloy composition search in accordance with an embodiment of the present invention may be preferably such that, in <5>, the target of the alloy composition search is a nickel-based superalloy, and in the measurement data storage section 130, the measurement data that pertains to the measurement target specimen is at least one type of: γ/γ' equilibrium composition data 64 that corresponds to the compositional elements 62 of the alloy; the fine precipitate identification data 44 and the indentation shape high-speed obtainment data 12 that correspond to the structural shape 42 of the alloy; the polycrystal orientation data 74 that corresponds to the anisotropy 72 of the alloy; and the load and displacement information that corresponds to the mechanical property that is measured by the nanoindentation tester 50.
<7> As shown in, for example, Fig. 2, the automatic evaluation device for alloy composition search in accordance with an embodiment of the present invention may be preferably such that, in <5>, in the post-processing section 200, the physical property data that corresponds to the measurement data from the measurement instruments is composition data (66) that corresponds to the crystal phase equilibrium composition data 64, precipitate morphology data (46) that corresponds to the fine precipitate identification data 44, or data that is obtained by (i) reading at least one type of the indentation shape high-speed obtainment data 12, the polycrystal orientation data 74, and the load and displacement information 54 and (ii) computing at least one type of an elastic constant, critical resolved shear stress (CRSS), a work hardening coefficient, and a creep deformation rate.
<8> As shown in, for example, Fig. 2, the automatic evaluation device for alloy composition search in accordance with an embodiment of the present invention may be preferably such that, in <6>, in the post-processing section 200, the physical property data that corresponds to the measurement data from the measurement instruments is composition data (66) that corresponds to the γ/γ' equilibrium composition data 64, precipitate morphology data (46) that corresponds to the fine precipitate identification data 44, or data that is obtained by (i) reading at least one type of the indentation shape high-speed obtainment data 12, the polycrystal orientation data 74, and the load and displacement information 54 and (ii) computing at least one type of an elastic constant, critical resolved shear stress (CRSS), a work hardening coefficient, and a creep deformation rate.
<9> The automatic evaluation device for alloy composition search in accordance with an embodiment of the present invention may be preferably such that, in any one of <1> through <8> and <1A>, the measurement target specimen 10 is the heat treatment temperature-graded material that has been obtained by heat-treating, in the furnace in which the heat treatment temperature is distributed in the graded manner between the upper and lower limit values, the compositionally graded material or, instead of the compositionally graded material, the test material which has the uniform composition; and the position of the indenter mark that has been formed on the measurement target specimen 10 is associated with the heat treatment temperature.
<10> The automatic evaluation device for alloy composition search in accordance with an embodiment of the present invention may be preferably such that, in any one of <1> through <9> and <1A>, the structural shape of the alloy indicates a phase transformation boundary region in which a crystal structure changes between a first crystal structure and a second crystal structure.
<11> The automatic evaluation device for alloy composition search in accordance with an embodiment of the present invention may be preferably such that, in <10>, the first crystal structure is a face-centered cubic lattice, and the second crystal structure is a hexagonal close-packed lattice.
<12> The automatic evaluation device for alloy composition search in accordance with an embodiment of the present invention may be preferably such that, in <10>, a composition ratio of the compositional elements changes at a boundary line between the first crystal structure and the second crystal structure.
<13> The automatic evaluation device for alloy composition search in accordance with an embodiment of the present invention may be preferably such that, in <10>, the mechanical property that is measured by the nanoindentation tester indicates a change in the mechanical property across a boundary line between the first crystal structure and the second crystal structure.
<14> The automatic evaluation device for alloy composition search in accordance with an embodiment of the present invention may be preferably such that, in <13>, the mechanical property is hardness.
<15> The automatic evaluation device for alloy composition search in accordance with an embodiment of the present invention may be preferably such that, in <9>, the measurement target specimen 10 has a composition range in which a γ/γ' two-phase structure is comprehensively covered; and
   with respect to an observation region that is constituted by a γ/γ' two-phase structure of a nickel-based superalloy, the post-processing section extracts tie-line information that pertains to the γ/γ' two-phase structure on the basis of an elemental map that has been obtained by the electron backscatter diffraction device and distinction between a γ phase and a γ' phase that has been performed with use of the scanning electron microscope.
<16> The automatic evaluation device for alloy composition search in accordance with an embodiment of the present invention may be preferably such that, in <9>, the measurement target specimen 10 is the heat treatment temperature-graded material that has been obtained by heat-treating the compositionally graded material in the furnace in which the heat treatment temperature is distributed in the graded manner between the upper and lower limit values; and γ' precipitate particle volume fraction data is constructed by analyzing a size and an amount of γ' precipitate particles in accordance with the heat treatment temperature.
<17> As shown in, for example, Fig. 3A, an automatic evaluation method for alloy composition search in accordance with an embodiment of the present invention includes: performing scanning electron microscope observation or electron backscatter diffraction observation with respect to a measurement target specimen 10 (S200); selecting a position for dynamic measurement on the basis of a structure, a phase, or a crystal structure on an obtained image (S220); arbitrarily storing, in a composition ratio storage section, a designed composition ratio of compositional elements that is at the position for the dynamic measurement (S400); performing a high-temperature hardness test (nanoindentation measurement) at a predetermined given temperature at the position that is on the measurement target specimen 10 and that has been selected for the dynamic measurement (S210); performing indentation shape measurement with respect to the position for the dynamic measurement (S220); computing a high-temperature stress-strain curve of the measurement target specimen 10 (S240); on the basis of the structure, the phase, or the crystal structure of an indenter mark on the measurement target specimen 10, arbitrarily associating, with data that pertains to the high-temperature stress-strain curve, the position that has been observed in the scanning electron microscope observation or the electron backscatter diffraction observation of the measurement target specimen 10 (S500).
<18> As shown in, for example, Fig. 3B, an automatic evaluation method for alloy composition search in accordance with an embodiment of the present invention includes: performing indentation shape measurement at a position which is on a measurement target specimen 10 that has been subjected to a high-temperature hardness test (nanoindentation measurement) at a predetermined given temperature by a nanoindentation tester and at which an indenter mark is formed (S220); computing a high-temperature stress-strain curve of the measurement target specimen 10 on the basis of a result of the indentation shape measurement (S240); performing scanning electron microscope observation or electron backscatter diffraction observation with respect to the measurement target specimen 10 (S300); with use of the indenter mark on the measurement target specimen 10 on an obtained image, selecting, as a position for dynamic measurement, a detailed position at which scanning electron microscope observation or electron backscatter diffraction observation is to be performed, and measuring a structure, a phase, or a crystal structure at the detailed position by the scanning electron microscope observation or the electron backscatter diffraction observation (S320); and on the basis of the structure, the phase, or the crystal structure of the indenter mark on the measurement target specimen 10, associating, with data which has been obtained by the dynamic measurement, the position which is on the measurement target specimen 10 and at which the scanning electron microscope observation or the electron backscatter diffraction observation has been performed (S500).
<19> The automatic evaluation method for alloy composition search in accordance with an embodiment of the present invention may be preferably such that, in <17> or <18>, the measurement target specimen is one of the following:
   a compositionally graded material that has a composition ratio graded between upper and lower limit values of each of compositional elements of an alloy system which is an evaluation target;
   a heat treatment temperature-graded material that has been obtained by heat-treating, in a furnace in which heat treatment temperature is distributed in a graded manner between upper and lower limit values, the compositionally graded material or, instead of the compositionally graded material, a test material which has a uniform composition;
   a heat-affected member that includes a region in which a base metal (such as metal or a thermoplastic material) is not melted but a microstructure and a property of the measurement target specimen have been changed by a welding operation or a thermal cutting operation;
   an additively manufactured metal material that has been manufactured as a metal component by dissolving metal powder for a necessary part with use of an electron beam or a fiber laser and solidifying the metal powder; and
   a metal powder injection molding material that is obtained by adding a binder to fine metal powder which is a raw material, without melting the fine metal powder, and that is injection-molded into a molded body which is to be degreased and sintered so as to obtain a metal component.
<20> The automatic evaluation method for alloy composition search in accordance with an embodiment of the present invention may be preferably such that, in <19>, the additively manufactured metal material is manufactured by one of the following:
   a powder bed method in which a process of (i) melting metal powder by irradiating, with a laser beam or an electron beam, a powder bed on which the metal powder is spread and (ii) solidifying the metal powder is repeated for each layer;
   a directed energy deposition method in which a manufactured article is manufactured by, while supplying powder, wire, or the like, (i) melting the powder, the wire, or the like with use of a laser or an electron beam and (ii) depositing the powder, the wire, or the like;
   a fused deposition modeling method in which metal powder is put into a thermoplastic resin, a mixture of the metal powder and the thermoplastic resin is deposited while being melted by heat, and a manufactured article that has been degreased after additive manufacturing is sintered so that the metal powder is solidified; and
   a binder jet method in which additive manufacturing is performed by ejecting a liquid binder from a nozzle onto metal powder and in which a process of lowering a build plate and spreading the metal powder again when ejection of the liquid binder and solidification of the metal powder are completed is repeated for each layer and, after additive manufacturing, sintering is performed, for example, in a high-temperature furnace or by a heater so that the liquid binder is removed.
<21> As shown in, for example, Fig. 3A and 3B, the automatic evaluation method for alloy composition search in accordance with an embodiment of the present invention may be preferably such that, in <17> or <18>, the measurement target specimen 10 is the heat treatment temperature-graded material that has been obtained by heat-treating (S120), in a temperature-graded heat treatment furnace in which heat treatment temperature is distributed in a graded manner between upper and lower limit values, the compositionally graded material or, instead of the compositionally graded material, the test material which has the uniform composition; and, furthermore, the heat treatment temperature is stored in a composition ratio storage section 66 together with a composition ratio of the measurement target specimen at the position for the dynamic measurement.
<22> The automatic evaluation method for alloy composition search in accordance with an embodiment of the present invention may be preferably such that, in any one of <17> through <21>, structural information that pertains to the measurement target specimen 10 is obtained with use of high-magnification scanning electron microscope observation with respect to the position for the dynamic measurement; and the structural information includes at least one of a crystal grain size, a precipitate particle diameter, and a volume fraction.
<23> The automatic evaluation method for alloy composition search in accordance with an embodiment of the present invention may be preferably such that, in any one of <17> through <22>, compositional information that pertains to the measurement target specimen 10 is obtained by measurement with respect to the position for the dynamic measurement with use of a wavelength-dispersive X-ray spectrometer or an energy-dispersive X-ray spectrometer; the compositional information includes at least one of a composition at each set of coordinates of the measurement target specimen 10, a composition of a matrix phase of the measurement target specimen 10, and a composition of precipitates of the measurement target specimen 10; and a composition ratio of compositional elements that is at the position for the dynamic measurement and that has been observed by the wavelength-dispersive X-ray spectrometer or the energy-dispersive X-ray spectrometer is stored in a composition ratio storage section 66.
<24> The automatic evaluation method for alloy composition search in accordance with an embodiment of the present invention may be preferably such that, in <19>, the measurement target specimen 10 is the compositionally graded material, and the compositionally graded specimen is prepared as follows: metal plates that are respectively made of the compositional elements of the alloy system which is an evaluation target are alternately stacked; the metal plates are temporarily joined by subjecting the metal plates to spark plasma sintering in a vacuum at a first predetermined given temperature for a first predetermined given time period in a state where the metal plates are held while being pressed at a first predetermined given stress; and
   with use of a hot isostatic pressing device, a temporarily joined spark plasma sintered material obtained is subjected to diffusion heat treatment in an Ar atmosphere at a second predetermined given temperature for a second predetermined given time period in a state where the temporarily joined spark plasma sintered material is held while being pressed at a second predetermined given stress.
<25> The automatic evaluation method for alloy composition search in accordance with an embodiment of the present invention may be preferably such that, in <24>, the metal plates that are respectively made of the compositional elements of the alloy system which is an evaluation target are a set of three metal plates that are respectively made of a first metal element, a second metal element, and a third metal element, and the metal plate of the second metal element and the metal plate of the third metal element are respectively stacked on upper and lower sides of the metal plate of the first metal element with the metal plate of the first metal element as an intermediate layer;
   the compositionally graded specimen that has been obtained by subjecting the temporarily joined spark plasma sintered material to the diffusion heat treatment is such that (i) at a first initial interface between the metal plate of the first metal element and the metal plate of the second metal element, a binary compositionally graded alloy of the first and second metal elements is generated in a direction perpendicular to the first initial interface and a second initial interface between the metal plate of the first metal element and the metal plate of the third metal element and (ii) at the second initial interface, a binary compositionally graded alloy of the first and third metal elements is generated; and
   a thickness of the metal plate of the first metal element is such a thickness that a ternary compositionally graded alloy of the first, second, and third metal elements is generated between the first and second initial interfaces.
<26> The automatic evaluation method for alloy composition search in accordance with an embodiment of the present invention may be preferably such that, in <25>, the first metal element is Ni, the second metal element is Ta, and the third metal element is W; the binary compositionally graded alloy of the first and second metal elements is Ni-Ta, and the binary compositionally graded alloy of the first and third metal elements is Ni-W; and the ternary compositionally graded alloy of the first, second, and third metal elements is Ni-Ta-W.

In the automatic evaluation device for alloy composition search in accordance with an embodiment of the present invention, the holding device for a compositionally graded specimen is provided, for example, in the field emission-scanning electron microscope, and the housing is provided which holds constant the positional relationship between the high-temperature nanoindentation and the at least one of the wavelength-dispersive X-ray spectrometer or the energy-dispersive X-ray spectrometer and the electron backscatter diffraction. Therefore, transfer and precise alignment of the compositionally graded specimen between the EPMA, the field emission-scanning electron microscope, and the nanoindentation device are unnecessary, and adjustment of setting of the specimen between these devices is simple.

As in <24> and <25>, in a case where the measurement target specimen is a heat treatment temperature-graded material which is obtained by (i) alternately stacking metal plates that are respectively made of compositional elements of an alloy system which is an evaluation target, (ii) subjecting the metal plates to diffusion heat treatment so that a compositionally graded specimen is produced in a direction perpendicular to joining surfaces of the metal plates that are respectively made of the compositional elements, and (iii) further heat-treating the compositionally graded material in a furnace in which heat treatment temperature is distributed in a graded manner between upper and lower limit values, the compositional element (Al) of the alloy and a γ' precipitate structure size vary depending on each position at which measurement is performed by the nanoindentation tester, and load-displacement curves have large distribution regarding the composition and heat treatment temperature of the compositionally graded specimen; therefore, mechanical property data can be obtained regarding a wide range of compositions and a wide range of heat treatment temperatures of the compositionally graded specimen.

Note, here, that the diffusion heat treatment is performed as follows: metal plates that are respectively made of compositional elements of an alloy system which is an evaluation target are alternately stacked; and, with use of a hot isostatic pressing device, the metal plates are subjected to diffusion heat treatment in an Ar atmosphere at a second given temperature for a second given time period in a state where the metal plates are held while being pressed at a second given stress.

### <Example 1: Development of integrated automatic high-throughput evaluation system>

Fig. 1 is a block diagram of the configuration of an integrated automatic high-throughput evaluation system serving as an automatic evaluation device 1000 for alloy composition search in accordance with an embodiment of the present invention. In Fig. 1, the automatic evaluation device 1000 for alloy composition search includes a specimen holding section 20 which holds a measurement target specimen 10 in a given posture, a housing section 30, an FE-SEM 40, a nanoindentation tester 50, a WDS/EDS 60, an EBSD 70, a measurement instrument link controller 110, a mechanical property distribution storage section 120, a measurement data storage section 130, and a post-processing section 200.

The measurement target specimen 10 is a compositionally graded material that has a composition ratio graded between the upper and lower limit values of each of compositional elements of an alloy system which is an evaluation target. Furthermore, the measurement target specimen 10 may be a heat treatment temperature-graded material that has been obtained by heat-treating the compositionally graded material in a furnace in which heat treatment temperature is distributed in a graded manner between the upper and lower limit values. Moreover, the measurement target specimen 10 may be a heat treatment temperature-graded material that has been obtained by heat-treating, in a furnace in which heat treatment temperature is distributed in a graded manner between the upper and lower limit values, a measurement target specimen which is a test material having a uniform composition.

The specimen holding section 20 holds the measurement target specimen 10 in a given posture, and is provided, for example, to a specimen table of the FE-SEM 40.

The housing section 30 holds the FE-SEM 40, the nanoindentation tester 50, and, as necessary, the WDS/EDS 60 and/or the EBSD 70, which are measurement instruments, and holds constant the relative positional relationship between the measurement target specimen 10 and these measurement instruments. The housing section 30 is desirably formed of a rigid material, and, for example, a metal material or a resin material is used.

The FE-SEM 40 is a field emission-scanning electron microscope, and is used to measure the structural shape of an alloy.

The nanoindentation tester 50 presses an indenter against the measurement target specimen 10, and measures a mechanical property on the basis of the shape of an indenter mark. In a case where the mechanical property of the measurement target specimen 10 is measured on the basis of the shape of the indenter mark, a Young's modulus or hardness, which are mechanical properties, may be obtained in a room-temperature nanoindentation device as disclosed in, for example, Non-Patent Literature 6.

The WDS/EDS 60 analyzes the compositional elements of the alloy. The term "WDS" is an abbreviation for wave dispersive spectrometer, and the term "EDS" is an abbreviation for energy dispersive spectrometer.

The EBSD 70 analyzes the orientation distribution, texture, or crystal phase distribution of crystal grains. The term "EBSD" is an abbreviation for electron back-scatter diffraction.

The measurement instrument link controller 110 controls measurement operations performed with respect to the measurement target specimen 10 by the FE-SEM 40, which is used to measure the structural shape of the alloy, and at least one type of measurement instrument among the nanoindentation tester 50, the WDS/EDS 60, and the EBSD 70. The measurement instrument link controller 110 is an example of an automatic control system.

The mechanical property distribution storage section 120 stores therein the distribution of the mechanical property of the measurement target specimen 10 in association with the position of the indenter mark that has been formed on the measurement target specimen 10, the mechanical property having been measured by the nanoindentation tester 50.

The measurement data storage section 130 stores therein, as measurement data that has been obtained by the measurement instruments (excluding the nanoindentation tester 50) and that pertains to the measurement target specimen, the measurement data from the measurement instruments so that the measurement data can be linked with the position of the indenter mark that has been formed on the measurement target specimen 10.

The post-processing section 200 computes physical property data that corresponds to the measurement data from the measurement instruments (excluding the nanoindentation tester 50). The physical property data is converted into information which is truly needed by a materials engineering expert during alloy design, such as phase diagram information, precipitate shape information, and a high-temperature mechanical property (elastic constant, stress-strain curve, yield stress, work hardening coefficient, or creep deformation rate).

Note that, in the case where the indenter mark has been formed by pressing the indenter against the measurement target specimen 10 and the distribution of the mechanical property of the measurement target specimen 10 is stored in advance, the automatic evaluation device 1000 for alloy composition search in accordance with an embodiment of the present invention can associate the measurement data that has been obtained by the measurement instruments (excluding the nanoindentation tester) and that pertains to the measurement target specimen 10, with the distribution of the mechanical property of the measurement target specimen 10 on the basis of the indenter mark that has been measured in the measurement target specimen 10 with use of the FE-SEM 40, even without attachment of the nanoindentation tester 50 to the housing section 30.

Fig. 2 is a diagram showing various incidental facilities of the integrated automatic high-throughput evaluation system 1000, raw measurement data obtained, and a data flow to the post-processing software. The measurement instrument link controller 110 obtains, as the measurement data that pertains to the measurement target specimen 10, an alloy composition 62 that is measured by the WDS/EDS 60, a structural shape 42 that is measured with use of the FE-SEM 40, an anisotropy 72 that is measured by the EBSD 70, and a dynamic property 52 that is measured by the nanoindentation tester 50.

As raw measurement data that has been obtained by the measurement instruments and that pertains to the measurement target specimen 10, the post-processing section 200 obtains γ/γ' equilibrium composition data 64 from the alloy composition 62 as raw measurement data, obtains fine precipitate identification data 44 and indentation shape high-speed obtainment data 12 from the structural shape 42 as raw measurement data, obtains polycrystal orientation data 74 from the anisotropy 72 as raw measurement data, and obtains load and displacement information 54 from the dynamic property 52 as raw measurement data.

Furthermore, the post-processing section 200 constructs, by means of the post-processing software, a database of a multi-component system from the raw measurement data that has been obtained by the measurement instruments and that pertains to the measurement target specimen 10. A composition database 66 is generated from the γ/γ' equilibrium composition data 64. The composition database 66 can also be referred to as a composition ratio storage section. A precipitate morphology database 46 is generated from the fine precipitate identification data 44. An elastic constant, a critical resolved shear stress (CRSS), a work hardening coefficient, and a creep deformation rate are generated from the indentation shape high-speed obtainment data 12, the polycrystal orientation data 74, and the load and displacement information 54, and are stored in a physical property data storage section 140.

Information pertaining to the database of the multi-component system that has been generated by the post-processing section 200 is linked with a property prediction program 300 and/or a computational phase diagram.

Fig. 3A is a flow diagram showing an example of an evaluation procedure performed by the integrated automatic high-throughput evaluation system 1000, and shows a case where the nanoindentation tester is embedded in the integrated automatic high-throughput evaluation system 1000. The integrated automatic high-throughput evaluation system 1000 in accordance with an embodiment of the present invention can maximize its effect by using the above-described compositionally graded and temperature-graded specimen.

First, an alloy system that is an evaluation target, for example, a nickel-based superalloy, is selected (S100).

Next, a specimen in which a plurality of alloy elements constituting the nickel-based superalloy have a compositional gradient is prepared (S110). For this preparation process, for example, a diffusion couple method or a Bridgman method may be used.

Furthermore, the compositionally graded material is set in a temperature-graded heat treatment furnace and heat-treated to prepare a compositionally graded and temperature-graded specimen (S120). Production process information that pertains to the diffusion couple method or the Bridgman method used in the process of preparing the compositionally graded material, or process information that pertains to the temperature-graded heat treatment furnace used for heat treatment is stored as process information, and provided for use in data re-analysis and mapping software (S130).

Next, SEM or EBSD observation is performed as a preliminary procedure for dynamic measurement, and a position for the dynamic measurement is selected on the basis of a structure, a phase, and a crystal structure on an obtained image (S200).

Next, a high-temperature hardness test (nanoindentation measurement) is performed at an arbitrary temperature (S210). At that time, by maintaining setting of the specimen during the SEM or EBSD observation and sharing coordinate information with the position of the indenter, it is possible to significantly shorten time required to determine a measurement position and significantly improve the accuracy of the position. Regarding the hardness measurement, it is possible to perform automatic multi-point measurement by determining a loading speed, an unloading speed, a maximum load, time for which the maximum load is held, etc. to the same conditions and setting a measurement pattern of regular intervals in a two-dimensional space on a surface of the specimen.

In subsequent steps (S220, S300, S400), dynamic, structural, and compositional information corresponding to the position of one indentation is obtained.

First, SEM observation for resetting the position of the indentation with high accuracy is performed (S220). At that time, with use of software in the integrated automatic high-throughput evaluation system 1000, a user initiatively specifies a hardness test range on the specimen which has undergone the high-temperature hardness test at tens to tens of thousands of points, then records in advance working distances WD (distances between an SEM lens and the specimen), at which high-resolution SEM imaging can be performed, at several points within the hardness test range, and estimates in advance a WD for the entire hardness test range so as to obtain high-resolution SEM photographs in focus. Thereafter, by automatically obtaining a plurality of low-magnification SEM images that have height information and then using software that is in the integrated automatic high-throughput evaluation system 1000 and that is capable of automatically detecting, from image contrast and/or the height information, (x, y) coordinates indicating the center of gravity of the indentation, it is possible to achieve a significant speedup of detection of the coordinates (x, y) of the indentation compared to manual measurement. Reset indentation position information can be repeatedly used until the specimen fixed on an SEM stage is removed. This technique can also be applied to a specimen that has been measured by an indenter independent of an SEM, and it is possible to determine, on an SEM stage, the position of an indentation with respect to an arbitrary specimen. Moreover, in a case where a hardness test is performed at a high temperature at an arbitrary (x, y) coordinate position and observation is performed at room temperature, the (x, y) coordinates may vary between the time when the high-temperature hardness test is performed and the time when the room-temperature observation is performed, due to the effect of thermal expansion of a specimen and peripheral facilities. However, by using these kinds of automatic coordinate detection software, it is possible to automatically detect the accurate coordinates (x, y) of an indentation immediately before the observation.

Next, in the integrated automatic high-throughput evaluation system 1000, the dynamic information (indentation shape multi-channel SEM measurement) (S220), the structural information (high-magnification SEM observation) (S300), and the compositional information (WDS/EDS measurement) are obtained with respect to the determined coordinates (x, y) of the indentation (S400).

Regarding the dynamic information among these pieces of information, surface topography images are simultaneously obtained from multiple directions with use of a multi-channel annular segmented backscattered electron detector provided under the objective lens of the SEM. The obtained SEM images are three-dimensionally reconstructed, and a protrusion (pile-up) height around the indentation is measured.

Since this height measurement method is a non-contact measurement method (imaging time=approximately 10 seconds), it is possible to achieve a significant speedup compared to conventional methods (scan time=approximately 120 seconds). Moreover, this height measurement method is a method which makes it possible to suppress deterioration of the indentation indenter.

Regarding the structural information among these pieces of information, coordinates corresponding to a flat surface of the specimen near the indentation are automatically calculated from the coordinates (x, y) of the indentation and the indentation height information, and then high-resolution SEM imaging is performed at the estimated working distance WD, whereby it is possible to automatically obtain the structural information including fine precipitates of several to several tens of nanometers (S300). This structure observation method is linked with automatically detected indentation coordinate (x, y) information. Therefore, this structure observation method makes it possible to automatically calculate an appropriate planar position and capture a high-resolution structure photograph, even in a case where a coordinate pattern of the indentation is complicated and the coordinates are arbitrary and even in a case where an indentation size varies depending on the coordinates, both cases having conventionally required manual setting of the coordinates.

Regarding the compositional information, similarly to the case of the structural information described above, the coordinates corresponding to the flat surface of the specimen near the indentation are automatically calculated from the coordinates (x, y) of the indentation and the indentation height information, and then analysis by the wavelength-dispersive X-ray spectrometer or measurement by the energy-dispersive X-ray spectrometer is performed at the estimated working distance WD, whereby it is possible to perform highly accurate composition analysis (S400). Similarly to the case of the structural information described above, this composition measurement method is linked with the automatically detected indentation coordinate (x, y) information. Therefore, this composition measurement method makes it possible to obtain highly accurate compositional information, even in a case where the coordinate pattern of the indentation is complicated and the coordinates are arbitrary and even in a case where the indentation size varies depending on the coordinates, both cases having conventionally required manual setting of the coordinates,.

In the integrated automatic high-throughput evaluation system 1000, the post-processing section 200, which executes the post-processing software, automatically analyzes the data which has been obtained automatically and at high speed in the steps so far.

That is, with use of a shape analysis and inverse analysis program (S230), a stress-strain curve is inversely estimated on the basis of the indentation height information and a load-displacement curve that is separately obtained by the nanoindentation measurement. In a case where it is assumed that information from inverse estimation has value comparable to that from actual measurement, it is expected that several hundred times higher efficiency is achieved.

Furthermore, in the integrated automatic high-throughput evaluation system, the structural information obtained in the structural information obtaining step (S300) is converted into necessary structural information (precipitate size, precipitate volume fraction, precipitate shape) with use of an automatic image processing program (S310), and the compositional information obtained in the compositional information obtaining step (S400) is converted into necessary compositional information with use of an automatic composition analysis program (S410).

The post-processing section 200, which executes the developed post-processing software, converts the raw data obtained as described above into information which is truly needed by a materials engineering expert during alloy design, such as equilibrium composition information, precipitate shape information, and a high-temperature mechanical property (elastic constant, stress-strain curve, yield stress, work effect coefficient, creep deformation rate) (see Fig. 2).

Furthermore, by storing the dynamic information, the structural information, and the compositional information together with the process information in the developed re-analysis and mapping software (S500), a composition-process-structure-property database in which mutual relationships thereof are clarified is obtained. The re-analysis and mapping software is a part of the post-processing software. The re-analysis and mapping software enables re-analysis of the raw data according to the purpose, and has a function that makes it possible to map composition-process-structure-property data on a phase diagram such that an alloy developer can easily understand the composition-process-structure-property data, thereby being capable of supporting planning of strategy for alloy development to the maximum extent. Furthermore, by selecting a target alloy in (S100) on the basis of this result, a database effective for alloy design can be efficiently obtained.

The integrated automatic high-throughput evaluation system 1000 exhibits a significant effect by targeting a compositionally graded specimen, but is also effective in obtaining, at high speed, the local composition, structure, and property of a general structural material having a complex hierarchical structure and a complex multi-phase structure.

The effect of the integrated automatic high-throughput evaluation system, serving as the automatic evaluation device 1000, and method for alloy composition search in accordance with embodiments of the present invention, which are configured as described above, is described below.

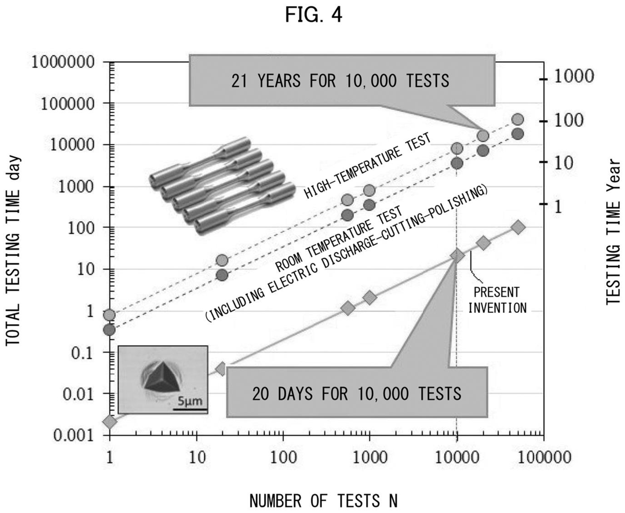

Fig. 4 is a diagram showing the relationship between testing time required for obtaining a dynamic property (stress-strain curves) and the number of tests N. In a conventional general method, in order to obtain, for example, a high-temperature stress-strain curve after a test specimen having given alloy components is prepared through alloy casting, a plastic working process, and heat treatment, it takes an average of one day with N=1 to perform (i) test piece sampling by electric discharge machining, (ii) cutting, (iii) surface polishing, and (iv) a tensile test. This means that, in a case where the number of tests is N=10000, it takes approximately 21 years to complete the tests.

On the other hand, although the following is a rough estimate targeting only a dynamic property, using the integrated automatic high-throughput evaluation system in accordance with an embodiment of the present invention makes it possible to obtain high-temperature stress-strain curves in only 20 days with respect to, for example, 10,000 alloys having different compositions. This indicates that an embodiment of the present invention is a high-speed evaluation system 384 times faster than the conventional method.

Thus, the integrated automatic high-throughput evaluation system 1000 in accordance with an embodiment of the present invention is an integrated evaluation device which makes it possible to obtain, within one device, an alloy composition, phase and orientation information, structural shape information, and a dynamic property at each set of coordinates on a compositionally graded and temperature-graded specimen. For that purpose, the WDS/EDS, the EBSD, and the high-temperature nanoindentation are provided in the FE-SEM, and automatically controlled by means of external software. The integrated high-speed processing automatic evaluation system 1000 thus has a mechanism which enables comprehensive automatic evaluation.

Fig. 3B is a flow diagram showing, as a variation, an example of the evaluation procedure performed by the integrated automatic high-throughput evaluation system 1000, and shows a case where the nanoindentation tester is not embedded in the integrated automatic high-throughput evaluation system 1000. When the example shown in Fig. 3B and the example shown in Fig. 3A are compared, the two differ in that, in the former, the step of performing a high-temperature hardness test (nanoindentation measurement) at an arbitrary temperature (S212) is performed by the nanoindentation tester that exists outside the integrated automatic high-throughput evaluation system. In other respects in the evaluation procedure, both are the same.

### Examples

### <Example 2: Example of automatic high-speed measurement of composition-hardness-Young's modulus>

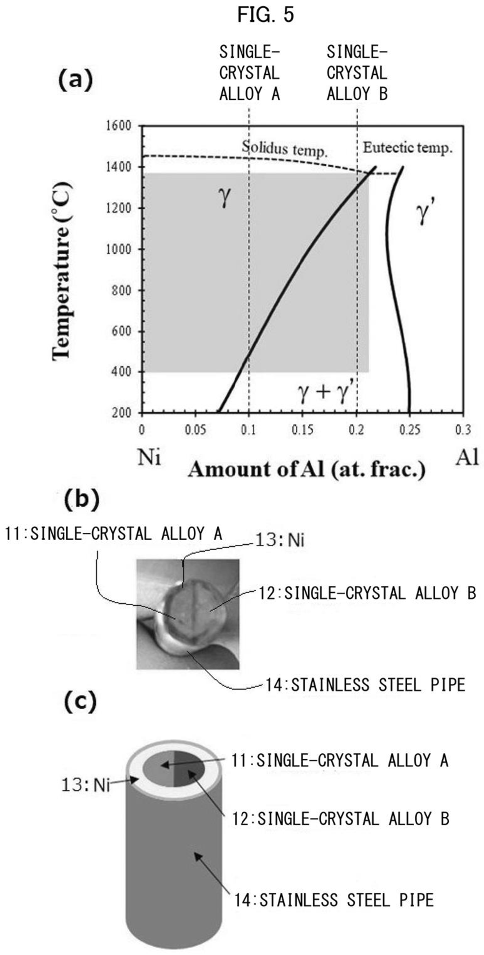

Here, introduced is an instance of high-throughput evaluation in which a compositionally graded and temperature-graded specimen of a Ni-Al binary alloy is utilized. As single-crystal alloys A and B which serve as a base material of a compositionally graded specimen, an alloy which has an Al content of 10 at.% and an alloy which has an Al content of 20 at.% were selected as an example. The Al contents here are, as shown in a Ni-Al phase diagram in (a) of Fig. 5, those of the alloys which respectively have γ' volume fractions (f_{V}) of 0% and 70% at 600°C, for example. A region which is shown in the phase diagram in (a) of Fig. 5 and in which the background is shaded in gray indicates the upper and lower limit values of composition and temperature at which the compositionally graded and temperature-graded specimen can be prepared with use of the Ni-Al binary alloy.

In an automatic evaluation device and an automatic evaluation method for a Ni-Al binary alloy, diffusion heat treatment in a γ single-phase region is needed, as described later. Therefore, the upper limit concentration of the Al content is a concentration (C_{Al}=21 at.%) at the intersection of a solidus temperature and a γ' solvus temperature. The lower limit concentration is an Al content of 0 at.%, which corresponds to pure Ni. The upper limit temperature is the solidus temperature, and the lower limit temperature is 400°C which is a specification of the device. Here, the result of using the alloy which has an Al content of 10 at.% and the alloy which has an Al content of 20 at.% is shown as an example, but the Al contents can be arbitrarily selected. Such a concept is also applicable to a multi-component superalloy, and a compositionally graded specimen of an arbitrary multi-component superalloy can be prepared by performing calculation with use of a commercially available computational thermodynamic phase diagram.

Here, Fig. 5 is a diagram showing an example of a method for designing a compositionally graded diffusion couple, and (a) is a Ni-Al phase diagram, (b) is an external appearance of a compositionally graded single-crystal alloy, and (c) is a perspective view of the configuration of the compositionally graded single-crystal alloy. In Fig. 5, the Al content of a single-crystal round bar A 11 is 10 at.%, and a residual thereof includes nickel and inevitable impurities. The Al content of a single-crystal round bar B 12 is 20 at.%, and a residual thereof includes nickel and inevitable impurities. Ni 13 is a Ni foil having a film thickness of 0.02 mm. A stainless steel pipe 14 is a holding material for subjecting, to HIP treatment, the single-crystal round bars A 11 and B 12 which are bonded to each other.

Here, HIP is an abbreviation for hot isostatic pressing. HIP is the process of performing pressing while simultaneously applying, to a treatment target, a high temperature of several 100 to 2000°C and an isotropic pressure of several 10 to 200 MPa. Usually, a gas such as argon is used as a pressure medium to apply isotropic pressure.

The single-crystal alloy A and the single-crystal alloy B were cast with use of a unidirectional solidification furnace. As shown in (b) and (c) of Fig. 5, the obtained single-crystal round bars A 11 and B 12 were each cut in the longitudinal direction at the {001} plane. The single-crystal round bars A 11 and B 12 were bonded to each other, and then vacuum-sealed in the stainless steel pipe 14 to prepare a sample for HIP. At the time of sealing, the Ni foil 13 having a thickness of 0.02 mm was placed between (i) the single-crystal round bars A 11 and B 12 and (ii) the stainless steel in order to avoid a reaction between the stainless steel pipe 14 and the base material. The sample for HIP was subjected to HIP treatment at 1100°C and 98.6 MPa in an Ar atmosphere for 3 hours. In this manner, it is possible to join two single-crystal alloys on the {001} planes.

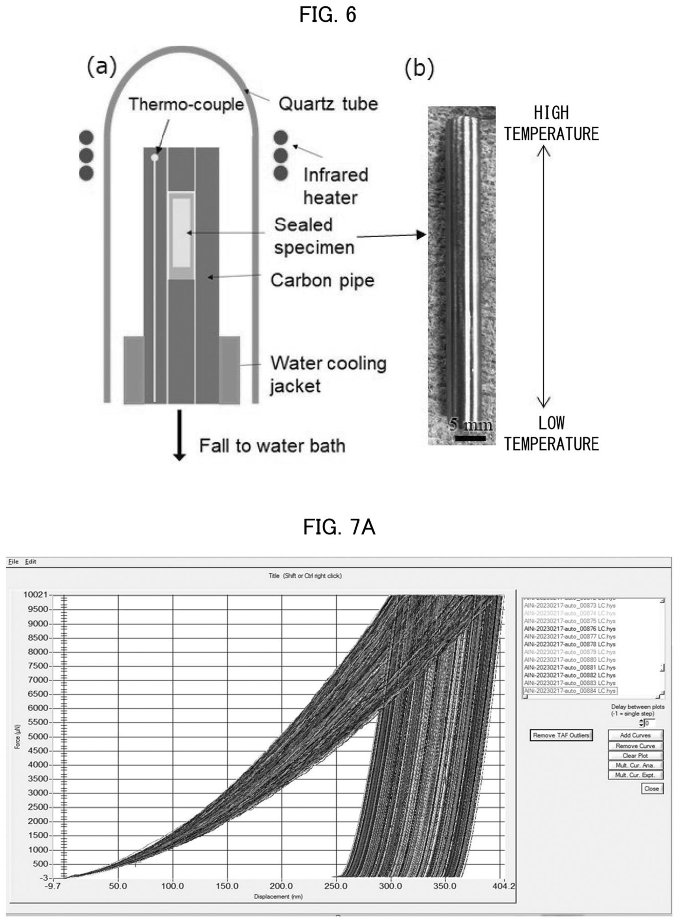

Subsequently, a HIP material thus obtained was subjected to diffusion heat treatment under conditions of 1300°C, 720 hours, and furnace cooling. A compositionally graded specimen was thereby prepared. Here, a temperature of 1300°C, which is a diffusion heat treatment temperature, is a temperature at which the single-crystal alloys A and B both have a γ single phase, as shown in (a) of Fig. 5. The obtained compositionally graded specimen was subjected to aging heat treatment with use of a temperature-graded heat treatment furnace as shown in Fig. 6. A compositionally graded and temperature-graded specimen was thereby prepared. The setting conditions for this process are a maximum specimen temperature of 1280°C, a minimum specimen temperature of 981°C, and an aging time of 3 hours. The compositionally graded and temperature-graded specimen was cut and polished at the {001} plane, and thereby a specimen for evaluation was prepared.

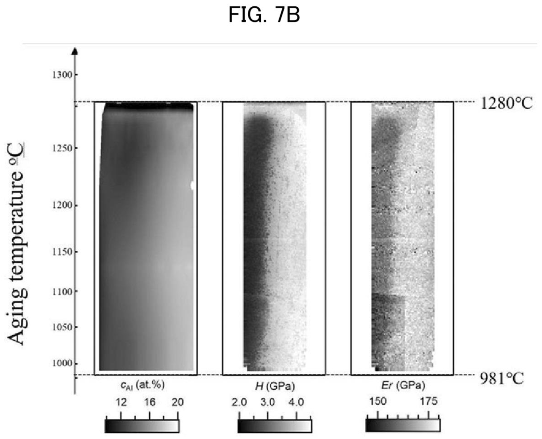

With respect to the {001}-plane polished surface of the compositionally graded and temperature-graded specimen prepared as described above, automatic nanoindentation tests were performed at a total of 10,000 points at intervals of 0.245 mm in the lengthwise direction and 0.075 mm in the diametrical direction. Fig. 7A is a diagram showing indentation load-displacement curves from the tests at 500 points among the tests at 10,000 points. The Al composition and a γ' precipitate structure size vary depending on each set of test coordinates. Thus, it is found that the load-displacement curves have a large distribution. Fig. 7B is a diagram showing the relationship between the aging temperature (981°C to 1280°C) and each of the A1 content C _{A1} (at.%), hardness H (GPa), and Young's modulus Er (GPa) of the cross section of the specimen. In this manner, the integrated automatic high-throughput evaluation system and method in accordance with embodiments of the present invention make it possible to evaluate, at high-throughput, a mechanical property of an alloy which corresponds to a wide range of compositions and a wide range of aging temperatures.

### <Example 3: Example of automatic high-speed measurement of structure database>

Here, shown is an instance of high-throughput evaluation in which a Ni-Co-based superalloy that has been newly developed for turbine disks is targeted and in which the relationship between the morphology of a γ' precipitate phase, which greatly affects the high-temperature property of the Ni-Co-based superalloy, and aging temperature is shown. Note, here, that a single-crystal round bar of Ni Bal.-11.7 Cr-27.0 Co-1.9 W-3.4 Mo-3.2 Al-4.4 Ti-2.2 Ta-0.5 Hf (wt.%) was used as an evaluation sample. This composition is similar to that of TMP (trademark)-5002 alloy, which is a powder metallurgy alloy that has been developed for turbine disks. The obtained round bar was water-cooled after homogenization heat treatment, and subjected to aging heat treatment with use of a temperature-graded heat treatment furnace as shown in Fig. 6, similarly to Example 2. The setting conditions for this process are a maximum specimen temperature of 1200°C, a minimum specimen temperature of 680°C, and an aging time of 3 hours. An obtained temperature-graded specimen was cut and polished in the longitudinal direction at the {001} plane, and thereby a specimen for evaluation was prepared.

Figs. 8A to 8F are each a diagram showing an example of the result of performing an automatic experiment and automatic analysis with respect to the {001}-plane polished surface with use of a nanoindentation and an SEM. Here, the number of measurement points at which the automatic experiment and the automatic analysis were performed is a total of 2400 points, and the automatic measurement was performed at 10 points for each of 240 temperature points.

Fig. 8A is a diagram showing an example in which automatic nanoindentation was performed with respect to the temperature-graded heat-treated specimen (S120 in Fig. 3B) of the multi-component Ni-based superalloy. It can be estimated that the heat treatment temperature of the temperature-graded heat-treated specimen is 1164.3°C at a measurement point a, 1161.7°C at a measurement point b, 1086.9°C at a measurement point c, 1014.0°C at a measurement point d, 940.1°C at a measurement point e, 868.7°C at a measurement point f, 793.2°C at a measurement point g, 721.7°C at a measurement point h, and 647.5°C at a measurement point i. In Fig. 8A, a shows SEM photographs showing the results of performing nanoindentation tests (S212 in Fig. 3B) with respect to microstructural positions that respectively exemplarily indicate the measurement points a through i on the temperature-graded heat-treated specimen. In Fig. 8A, b is a diagram three-dimensionally showing indentation load-displacement curves obtained at the measurement points, including the measurement points a through i exemplarily shown, at a total of 240 temperature points, wherein the horizontal axis shows depth [nm], the vertical axis shows force [µN], and the depth shows heat treatment temperature [°C]. InFig. 8A, c is a diagram two-dimensionally showing the obtained indentation load-displacement curves, wherein the horizontal axis shows the depth [nm] and the vertical axis shows the force [µN].

Fig. 8B shows an example in which coordinate information at the time of the indentation measurement was passed to the SEM and the shapes of indentations were automatically obtained at respective coordinate positions (S220 in Fig. 3B). By automatically obtaining, at each of the measurement points a through i on the temperature-graded heat-treated specimen, a plurality of low-magnification SEM images having height information, it is possible to reconstruct an image having the height information at each measurement position.

Fig. 8C shows an example of the result of automatically performing high-resolution SEM imaging at an estimated working distance WD after automatically calculating coordinates corresponding to a flat surface of the specimen near each indentation, and shows the measurement points a through i on the temperature-graded heat-treated specimen. It can be confirmed that information pertaining to a structure including fine γ' precipitates of several tens to several hundreds of nanometers can be automatically obtained.

Fig. 8D is a diagram showing the result of analyzing hardness H (GPa) ((a) of Fig. 8D) and a reduced elastic modulus Er (GPa) ((b) of Fig. 8D), which were obtained from the indentation load-displacement curves shown in Fig. 8A, and pile-up height Hp ((c) of Fig. 8D) which was analyzed with use of a shape analysis program (S230 in Fig. 3B) from the indentation height information in Fig. 8B. It can be confirmed that H, Er, and Hp vary depending on changes in the structure shown in Fig. 8C.

Fig. 8E is a diagram showing yield strength σ_{Y} (MPa) ((a) of Fig. 8E), a work hardening rate B (MPa) ((b) of Fig. 8E), all obtained stress-strain curves ((c) of Fig. 8E), and examples of the stress-strain curves ((d) of Fig. 8E) which were analyzed with use of information shown in Fig. 8D and an inverse analysis program (S230 in Fig. 3B). It was confirmed that, by using the inverse analysis program, a large amount of data which indicates the influence of the structure on the stress-strain curves and which is essential for alloy design and component design can be obtained in a short time and automatically.

Fig. 8F is a diagram showing the volume fraction f_{V} of aging precipitates and cooling precipitates ((a) of Fig. 8F), a precipitate size ((b) of Fig. 8F), and a precipitate shape ((c) of Fig. 8F) which were analyzed with use of an automatic image processing program (S310 in Fig. 3B) from the SEM image information shown in Fig. 8A. Note, here, that the ratio of the major axis to the minor axis of a superellipse is used for the precipitate shape (median superellipse). A superellipse is a closed curve similar to an ellipse.

As shown in Fig. 8F, it is found that the size and the amount of γ' precipitate particles which grow by aging greatly vary depending on coordinates on the {001} observation plane. As shown in (a) of Fig. 8F, it was found that the obtained volume fraction tends to be relatively close to a volume fraction estimated with use of Thermo-Calc (trademark), which is commercially available thermodynamic equilibrium calculation software. On the other hand, as shown in (b) of Fig. 8F, it was possible to comprehensively obtain precipitate sizes in a wide aging temperature range. These pieces of size data become a database important for constructing a prediction formula based on Ostwald ripening of precipitates. Specifically, these pieces of size data contribute to determination of various parameters (reaction time, diffusion coefficient, activation energy, etc.) necessary for calculating an Ostwald ripening rate.

As described above, the automatic evaluation device and method for alloy composition search in accordance with embodiments of the present invention make it possible to obtain, at high speed compared to conventional methods, a set of experimental data that pertains to structural information (volume fraction f_{V} of aging precipitates and cooling precipitates, precipitate size, and precipitate shape) and a mechanical property (hardness H (GPa), reduced elastic modulus Er (GPa), yield strength σ_{Y} (MPa), work hardening rate B (MPa), stress-strain curve).

### <Example 4: Example of automatic high-speed measurement of solid solution strengthening database>

Here, shown is an instance of high-throughput high-temperature evaluation in which a Ni-Ta-W compositionally graded specimen is utilized. An evaluation sample was prepared from a Ni plate having a thickness of approximately 1.0 mm, a Ta plate having a thickness of 0.2 mm, and a W plate having a thickness of 0.2 mm. These plates were alternately stacked in the manner of Ni-Ta-Ni-W-Ni, and temporarily joined in a vacuum under conditions of 700°C, 98 MPa, 5 min with use of a spark plasma sintering (SPS) device. Thereafter, with use of a HIP device, diffusion heat treatment was performed with respect to an obtained SPS material in an Ar atmosphere at 1250°C and 50 MPa for 24 hours, whereby a compositionally graded specimen was produced. An SEM photograph of the obtained compositionally graded specimen is shown in Fig. 9. At a Ni-Ta initial interface, a Ni-Ta binary compositionally graded alloy can be produced in the direction perpendicular to the interface. At a Ni-W initial interface, a Ni-W binary compositionally graded alloy can be produced in the direction perpendicular to the interface. A Ni-Ta-W ternary compositionally graded alloy can be produced between these two initial interfaces.

A high-temperature nanoindentation test was performed on the compositionally graded specimen. The test conditions are room temperature, 200°C, and 400°C. The load condition is a maximum load of 50 mN. The measurement interval is 0.050 mm in the direction of a compositional gradient. Fig. 10 shows indentation load-displacement curves obtained as a result of performing the nanoindentation test at coordinates at which Ni was 93 at.% and Ta was 7 at.% in the compositionally graded specimen. Hardness decreases from room temperature to 200°C, but the hardness at 200°C and the hardness at 400°C indicate almost equivalent values. By measuring the shape of an indentation (pile-up height) in addition to such a load-displacement curve and utilizing the techniques disclosed in Non-patent Literatures 5 and 7, it becomes possible to estimate a high-temperature stress-strain curve at hardness measurement coordinates (in this case, Ni 93 at.%-Ta 7 at.% alloy).

Fig. 11A is a diagram showing examples of automatic measurement of the shape of an indentation and an obtained high-temperature stress-strain diagram. (a) shows an SEM image, and (b) and (c) of each show the three-dimensional shape of the indentation, the three-dimensional shape having been obtained with use of an SEM. In Fig. 11A, an SEM photograph of the indentation ((a) of Fig. 11A) and a three-dimensional height profile ((b) and (c) of Fig. 11A) which were automatically measured at high speed by a newly introduced SEM-multi-channel annular segmented backscattered electron detector are shown. Conventionally, a shape has been measured with use of an AFM which is a function of nanoindentation, but non-contact measurement with use of an SEM has made it possible to obtain a three-dimensional height profile with equivalent height accuracy.

Fig. 11B is a diagram showing examples of the automatic measurement of the shape of the indentation and an obtained high-temperature stress-strain diagram. (d) shows an example of an output from a pile-up height measurement program, and (e) shows high-temperature stress-strain curves (example: Ni 93%-Ta 7% region) which were estimated from load-displacement curves and the shape of the indentation. (d) of Fig. 11B is an image outputted by a pile-up height evaluation program which is separately developed post-processing software. This program identifies the position of the center of gravity of a triangular pyramidal indentation from a height profile, and determines a pile-up height on 36 lines that are at regular intervals from the center of gravity. By such a series of functions, a 26-fold speedup has been successfully achieved compared to conventional shape measurement methods. (e) of Fig. 11B shows the stress-strain curves which were estimated from the load-displacement curves and the pile-up height.

Fig. 12 shows the results of a composition ((a) of Fig. 12), a Young's modulus ((b) of Fig. 12), hardness ((c) of Fig. 12), the pile-up height ((d) of Fig. 12), a work effect coefficient ((e) of Fig. 12), and yield stress ((f) of Fig. 12) which were obtained by utilizing the integrated automatic high-throughput evaluation system 1000 and the post-processing software. By using the present invention, it became possible to evaluate, automatically and at high speed, the high-temperature Young's modulus and the high-temperature yield stress of a Ni alloy having a wide range of Ta and W compositions. Obtained composition-yield stress data can be utilized as a solid solution strengthening database for Ni-W, Ni-Ta, and Ni-Ta-W alloys. Specifically, by utilizing the composition-yield stress data as a solid solution strengthening database in a commercially available strength prediction program or a strength prediction program that has been separately developed by the inventors of the present invention as shown in Non-patent Literatures 3 to 5, it is possible to enhance the accuracy of prediction of a property of a Ni-based superalloy and expand an applicable composition range of the Ni-based superalloy.

### <Example 5: Example of automatic high-speed measurement of solid solution strengthening database>

Here, shown is an instance of high-throughput high-temperature evaluation in which a compositionally graded specimen of a Ni-Co binary alloy is utilized. Focusing on two elements, Ni and Co, which are important γ-phase constituent elements of Ni-Co based superalloys, a diffusion couple sample was prepared. Ni and Co plates were alternately stacked and joined by SPS sintering. An obtained specimen was heat-treated at 1150°C for 3000 hours so that Ni and Co elements were sufficiently diffused. Subsequently, the specimen was subjected to HIP treatment at 1120°C and 98 MPa, whereby a compositionally graded diffusion couple specimen was prepared (Fig. 13A).

Fig. 13B shows the result of performing hardness tests by a nanoindentation method at a total of 630 points on the compositionally graded specimen in a temperature range from room temperature to 500°C. In a region in which the composition ratio of Ni is 1 at% to 23 at%, a roughly equivalent property is exhibited, hardness H is in the range of 3.4 GPa to 4.1 GPa at 300 K, and the hardness tests were performed for 370 K, 470 K, 570 K, 670 K, and 770 K. The hardness softens with increase in temperature; at 670 K, the hardness H is in the range of 2.2 GPa to 3.0 GPa, but at 770 K, the hardness H decreases to the range of 1.2 GPa to 1.7 GPa. In a region in which the composition ratio of Ni is 44 at% to 91 at%, the hardness H at room temperature of 300 K is in the range of 1.9 GPa to 2.1 GPa, and is approximately half the hardness H of the Ni-Co binary alloy in the region in which the composition ratio of Ni is 1 at% to 23 at%. In the Ni-Co binary alloy in which the composition ratio of Ni is 30 at% and 37 at%, the property varies between the above two ranges depending on the hardness test temperature. In the Ni-Co binary alloy in which the composition ratio of Ni is 30 at%, the hardness H is in the range of 3.0 GPa to 3.2 GPa at 570 K, but the hardness H decreases to the range of 1.5 GPa to 2.0 GPa at 670 K. In the Ni-Co binary alloy in which the composition ratio of Ni is 37 at%, the hardness H is in the range of 3.0 GPa to 3.2 GPa at 470 K, but the hardness H decreases to the range of 1.6 GPa to 1.8 GPa at 570 K.

Fig. 14 shows a hardness map superposed on a Ni-Co binary phase diagram. At room temperature, the hardness gradually increased with increase in Co content. Furthermore, it can be confirmed that the hardness sharply increases at a Co content at which a crystal structure undergoes phase transformation from a face-centered cubic (FCC) structure to a hexagonal closest packing (HCP) structure on the phase diagram. The hardness gradually decreased in an entire Co region with increase in temperature. A particularly noteworthy point is that, although, on the phase diagram, the Co content at which the phase transformation occurs tends to increase with increase in temperature, the hardness results accurately represent those phase transformation behaviors. As described above, it was found that the integrated automatic high-throughput evaluation system 1000 makes it possible to accurately obtain a hardness map over a wide range of compositions and a wide range of measurement temperatures with respect to an arbitrary alloy system, and makes it possible to store, on a general phase diagram, data indicating a mechanical property.

### <Automatic composition analysis software for γ-γ' two-phase structure>

Here, the necessity of an automatic analysis program for tie-line information in a γ-γ' two-phase structure and an instance of utilization of the automatic analysis program are shown. A tie-line refers to an isotherm passing through a two-phase region on a phase diagram. A large number of γ-γ' tie-line composition sets are required to create a phase diagram of a multi-component alloy. For example, in a quaternary composition space, phase boundaries are curved surfaces in three dimensions, and determination thereof requires several hundreds or more points (phase boundary composition data). Since the number of necessary tie-line composition sets increases exponentially with increase in constituent elements, it is essential to introduce an automatic analysis program.

In the automatic analysis program, it is possible to determine the composition of γ and γ' phases from an SEM image and an elemental map of a γ-γ' two-phase structure in a region which has a size of 25 × 25 mm and in which local equilibrium holds, the elemental map being obtained in area analysis by an EPMA. The automatic analysis program is also applicable to some microstructures constituted by γ'-phase grains of 0.4 mm exceeding the spatial resolution of an EPMA of 1 mm, and can handle, for example, up to 8-component systems. However, the automatic analysis program is not limited to this example, and the number of dimensions to be analyzed can be increased or decreased according to the number of compositional elements of a multi-dimensional alloy to be analyzed.

Generally, the accuracy of composition measurement by an EPMA is superior in point analysis. However, since identification of the positions of precipitate grains of several micrometers or less and a plurality of measurement points are required, the time required for the analysis is three times or more the time required for area analysis.

Fig. 15A through 15E show an example of analysis performed by the automatic composition analysis program in accordance with an embodiment of the present invention, and are external views of an interface therefor. In the automatic composition analysis program in accordance with an embodiment of the present invention, area analysis is employed, identification of the positions of γ' grains is unnecessary, and data can be obtained by single measurement. Therefore, for example, in the case of a quaternary system, it is possible to automatically determine the composition thereof in a measurement time of approximately 4 minutes in one region.

Fig. 15A is a diagram displaying respective EPMA maps of elements of a Ni-Co-Al-Ti quaternary alloy.

Fig. 15B is an SEM photograph showing crystal grains to be analyzed of the Ni-Co-Al-Ti quaternary alloy and also showing a region targeted for area analysis by an EPMA.

Fig. 15C is a diagram showing tie-line data setting conditions for the automatic composition analysis program to determine a γ-γ' composition necessary for a phase diagram DB. A tie-line data setting screen 500 has a composition folder loading instruction part 501, a current map number display part 502, an elemental map feeding button 504, an element selection button 506, a noise threshold setting part 507, a noise removal instruction part 508, a first boundary line selection button 510, a second boundary line selection button 512, a skip button 514, a single phase specification button 516, and a tie-line registration button 518.

An elemental map to be analyzed is specified with use of the elemental map feeding button 504. An element to be analyzed is selected with use of the element selection button 506. A corresponding phase is specified with use of a popup of the first boundary line selection button 510 (Boundary 1) or the second boundary line selection button 512 (Boundary 2). The noise threshold setting part 507 (LQ) is a popup for setting a parameter for removing noise such as a region that is affected by a void or the like, among data included in the elemental map, for example, 2400 points. The noise removal instruction part 508 removes, from the analysis target, data that is included in the elemental map and that has been determined as noise on the basis of a threshold in the noise threshold setting part 507 (LQ). When the specification of the phase and the removal of the noise are completed regarding the elemental map, the tie-line registration button 518 is pressed, or the skip button 514 or the single phase specification button 516 is pressed.

Fig. 15D is a diagram showing the result of analyzing the compositions of γ and γ' phases in the region targeted for the area analysis by the EPMA. Information on a standard specimen and two phase boundary compositions that have been obtained by the analysis are displayed. The names of elements and the type and intensity of characteristic X-rays of the standard specimen are displayed. In the phase boundary composition indicated by Boundary 1, Ni is 33%, Co is 55%, Al is 7%, and Ti is 4% (unit is atomic %). In the phase boundary composition indicated by Boundary 2, Ni is 46%, Co is 32%, Al is 11%, and Ti is 11% (unit is atomic %).

With use of a compositionally graded specimen that has a composition range in which the γ-γ' two-phase region of the Ni-Co-Al-Ti quaternary alloy is comprehensively covered, approximately 1000 EPMA elemental map sets were obtained, and tie-line composition sets therefor were determined.

Fig. 15E is a diagram showing tie-line data pertaining to the Ni-Co-Al-Ti quaternary alloy. Dark gray round dots each indicate a phase boundary composition on a γ-phase side. Light gray dots each indicate the phase boundary composition of a γ phase that differs from a γ phase corresponding to a γ-phase composition which is indicated by a dark gray round dot connected thereto by a straight line. Two black dots connected by a thin straight line indicate the phase boundary compositions of a combination of phases that differ from the γ phase.

Such pieces of tie-line data can be utilized as a database for a computational phase diagram, and greatly contribute to enhancement of the accuracy of calculation of a computational phase diagram of a multi-component alloy.

### <Data re-analysis and mapping software>

By storing dynamic information, structural information, compositional information, which have been obtained by the automatic evaluation device for alloy composition search in accordance with an embodiment of the present invention, and process information in the developed re-analysis and mapping software (S500 in Fig. 3), it is possible to convert these pieces of information into a composition-process-structure-property database in which the mutual relationships therebetween are clarified. Moreover, by visualizing big data, it is also possible to detect data indicating an abnormal value from more than several million data groups.

Fig. 16 shows examples of an interface of the data re-analysis and mapping software.

Fig. 16A is a diagram displaying, on a position map of a measurement target specimen, markers corresponding to respective measurement points.

This data re-analysis and mapping software is stored, for example, in the post-processing section 200 or the property prediction program 300. This data re-analysis and mapping software accesses the mechanical property distribution storage section 120 and the measurement data storage section 130, and reads out measurement data including information that has been collected regarding a nanoindentation, the WDS/EDS, the SEM, and the EBSD at each measurement point. By means of this data re-analysis and mapping software, it is possible to display, on a position map of a surface of the measurement target specimen 10, markers corresponding to respective measurement points with respect to selected arbitrary data, for example, as shown in Fig. 16A. The markers corresponding to the respective measurement points may be displayed on a phase diagram, instead of the position map of the surface of the measurement target specimen 10. Here, the phase diagram can be created by reading a TDB file which is a data file for a thermodynamic equilibrium phase diagram.

(a) through (e) of Fig. 16B are diagrams respectively displaying, on phase diagrams or position maps, mechanical properties such as reduced elastic modulus Er (GPa), pile-up height Hp, a work hardening rate B (MPa), hardness H (GPa), and yield strength sY (MPa) at each measurement point of the measurement target specimen. As shown in each of (a) through (e) of Fig. 16B, it is possible to map, on a phase diagram or a position map, a mechanical property such as reduced elastic modulus Er (GPa), pile-up height Hp, a work hardening rate B (MPa), hardness H (GPa), and yield strength sY (MPa), and it is designed so that an alloy developer can easily understand measurement data.

Fig. 16C is a diagram showing a case where the data re-analysis and mapping software displays property values at an arbitrary point selected from among the measurement points in Fig. 16A on the measurement target specimen. A measurement target specimen property value display 600 has a phase diagram-Ni visualization system display part 610, a specimen and measurement information display part 630, and a measurement point information display part 660.

The phase diagram-Ni visualization system display part 610 has a database selection part 612, a tdb and specimen list update button 614, a phase diagram registration button 616, a property sheet creation button 618, a tdb file list button 620, an unregistered specimen list button 622, a property data recalculation button 624, a phase diagram recalculation button 626, and a property redisplay button 628.

The specimen and measurement information display part 630 has a specimen name display part 632, a specimen type display part 634, a constituent element display part 636, a specimen production date display part 638, an others display part 640, an NI folder selection part 642, an EPMA folder selection part 644, an Hp folder selection part 646, an EBSD folder selection part 648, an EDS folder selection part 650, and a microstructure folder selection part 652.

The measurement point information display part 660 has an individual compositional element display column 662, a mechanical property display column 664, a crystal orientation display column 666, and a microstructure display column 668. The individual compositional element display column 662 includes columns of Ni (nickel), Co (cobalt), Cr (chromium), W (tungsten), Mo (molybdenum), Nb (niobium), Al (aluminum), Ti (titanium), Hf (hafnium), C (carbon), B (boron), and Zr (zirconium).

The mechanical property display column 664 includes columns of σY, Er, H, Hp, and B. Here, σY is yield strength, Er is reduced elastic modulus, H is hardness, Hp is pile-up height, and B is a work hardening rate. The microstructure display column 668 is provided with columns of fγ', dγ', and TCP (Topologically Close Packed). fγ' indicates a γ'-phase fraction, dγ' indicates the average particle diameter of γ'-phase precipitates, and TCP indicates the presence or absence of TCP.

Fig. 16D is a diagram displaying raw data that pertains to a load-displacement curve which has been obtained by nanoindentation, a microstructure, and pile-up analysis. A raw data display screen 700 has an NI profile screen 710, a microstructure screen 720, and a pile-up screen 730. Regarding the microstructure and the pile-up analysis, re-analysis can be performed.

On the NI profile screen 710, an SEM image 712 of an indentation and a stress-displacement curve 714 are displayed. On the microstructure screen 720, an SEM image in which detected regions of a γ' phase are colored black is displayed. On the pile-up screen 730, the position of the maximum height obtained by the analysis is displayed on the image of the indentation.

As described above, the data re-analysis and mapping software makes it possible to reanalyze raw data according to a purpose, and has a function that makes it possible to map composition-process-structure-property data on a phase diagram or a position map so that an alloy developer can easily understand the composition-process-structure-property data. Thus, the data re-analysis and mapping software is capable of supporting planning of strategy for alloy development to the maximum extent.

The integrated automatic high-throughput evaluation system serving as an automatic evaluation device for alloy composition search in accordance with an embodiment of the present invention has the following effects.

The present invention relates to an automatic high-throughput evaluation technique for a composition-process-structure-property database that is for achieving significant enhancement of accuracy and expansion of the range of prediction in prediction of performance in the field of structural materials, and also relates to an all-in-one automatic evaluation system which enables the automatic high-throughput evaluation technique. For example, the present invention exhibits the ability thereof by using, as an evaluation sample, a compositionally graded material, a temperature-graded specimen, or a compositionally graded and temperature-graded material of a multi-component alloy containing more than 10 elements, such as a Ni-based superalloy, the temperature-graded specimen being a specimen in which heat treatment temperature has been unidirectionally graded, the compositionally graded and temperature-graded material having both features. Note, here, that a compositionally graded and temperature-graded evaluation sample is a specimen in which composition and a heat treatment temperature condition vary depending on each set of coordinates within one sample.

The automatic evaluation system for alloy composition search in accordance with an embodiment of the present invention has the feature of being capable of evaluating, automatically and at high speed, composition analysis, structural feature analysis, and a high-temperature mechanical property with respect to such a special specimen. Specifically, the automatic evaluation system is an evaluation system in which a WDS/EDS that is capable of composition analysis is provided to a high-resolution and dual-beam FE-SEM that is capable of high-resolution analysis of a structure and analysis of the shape of an indentation indenter and in which a high-temperature nanoindentation that is installed in the SEM obtains, automatically and at high speed, a high-temperature Young's modulus and high-temperature hardness at each set of coordinates.

Furthermore, the composition analysis program, the automatic image processing program for structures, and a dynamic property analysis program, which are the post-processing software linked with the automatic evaluation device for alloy composition search in accordance with an embodiment of the present invention, automatically analyze composition, the shape of precipitates, and a stress-strain curve at a measurement point, respectively. In this manner, by setting a compositionally graded and process-graded evaluation sample in the evaluation system, performing an automatic experiment, and executing post-processing, it is possible to evaluate a composition-process-structure-property database at high throughput. For example, in usual alloy production, heat treatment, test piece processing, and high-temperature strength evaluation, an evaluation time of 3 weeks is required for one composition. In contrast, in an embodiment of the present invention, it is possible to construct a database in 3 weeks with respect to 10,000 compositions, and an approximately 10,000-fold speedup can be expected compared to conventional evaluation methods.

Fig. 17A is a cross-sectional view of a main part of a welded portion that is an example in which a measurement target specimen exhibits a compositional gradient and/or a structural variation, and shows a welded portion of, for example, a turbine disk material made of a nickel-based superalloy.

In the welded portion of the turbine disk material in Fig. 17A, when a welding rod (torch) 810 is brought to a depression in a base metal 800, a molten weld metal 820 is formed. A heat-affected zone (HAZ) is formed in a boundary layer between the base metal 800 and the weld metal 820. Thus, the welded portion has a macro-scale compositional gradient and/or structural variation across the weld metal 820, the HAZ portion 830, and the base metal 800.

Fig. 17B is a dendrite solidification structure diagram of the weld metal shown in Fig. 17A. The dendrite solidification structure diagram of the weld metal 820 has primary dendrite arms 822 and secondary dendrite arms 824.

Fig. 17C is a structure diagram of the HAZ (heat-affected zone) shown in Fig. 17A. The HAZ portion 830 has a multi-phase polycrystalline structure of a matrix phase 832 and a second phase 834.

Fig. 17D is a structure diagram of the base metal shown in Fig. 17A. The base metal 800 has a multi-phase polycrystalline structure of a matrix phase 802, a second phase 804, and an abnormal structure 806. The abnormal structure 806 includes abnormal grain growth, an unsintered portion, or the like, and is a portion that determines the quality and the macro properties of a component.

Fig. 18A is an overall perspective view of a turbine blade 840 that is an example in which a measurement target specimen exhibits a compositional gradient and/or a structural variation, and shows a thick wall portion 850 and a thin wall portion 860. The turbine blade corresponds to a single-crystal turbine blade that is produced by precision casting, a unidirectionally solidified turbine blade, or a complexly shaped product as an additively manufactured metal material that is manufactured by a three-dimensional modeling method.

Fig. 18B is a dendrite solidification structure diagram of the thick wall portion shown in Fig. 18A. The dendrite solidification structure diagram of the thick wall portion 850 has primary dendrite arms 852 and secondary dendrite arms 854.

Fig. 18C is a dendrite solidification structure diagram of the thin wall portion shown in Fig. 18A. The dendrite solidification structure diagram of the thin wall portion 860 has primary dendrite arms 862 and secondary dendrite arms 864. In the dendrite solidification structure diagram of the thin wall portion 860, a dendrite solidification structure is smaller than that in the dendrite solidification structure diagram of the thick wall portion 850.

Fig. 19 is a structure diagram of a multi-phase polycrystalline structure material that is an example in which a measurement target specimen exhibits a compositional gradient and/or a structural variation. In the multi-phase polycrystalline structure material 870, a matrix phase 872, a second phase 874, and an abnormal structure 876 differ in composition and mechanical property. The abnormal structure 876 includes abnormal grain growth, an unsintered portion, or the like, and is a portion that determines the quality and the macro properties of a component.

A case where a nickel-based superalloy is a target of the alloy composition search in accordance with an embodiment of the present invention has been described. However, an evaluation target of the automatic evaluation device for alloy composition search in accordance with an embodiment of the present invention is not limited to a nickel-based superalloy, and may be a cobalt-based superalloy or an iron-based superalloy, may be a high-entropy alloy, or, furthermore, may be an aluminum alloy or a titanium alloy. In this case, examples of precipitate morphology data include data pertaining to crystal grains, guinier-preston zones (G. P. zones), atomic clusters that are precursors of G.P. zones, and quasicrystals.

### Industrial Applicability

The integrated automatic high-throughput evaluation system serving as the automatic evaluation device for alloy composition search in accordance with an embodiment of the present invention exhibits a significant effect by targeting a compositionally graded specimen, but is also effective in obtaining, at high speed, the local composition, structure, and property of a general structural material having a complex hierarchical structure. Furthermore, by targeting a compositionally-graded and temperature-graded sample which is obtained by subjecting a compositionally graded material to temperature-graded heat treatment so that one sample has a large compositional gradient and a large structural gradient, it is possible to obtain a highly accurate and wide-range composition-process-structure-property data set at once.

### Reference Signs List

10 Measurement target specimen
20 Specimen holding section
30 Housing section
40 Field emission-scanning electron microscope (FE-SEM)
46 Precipitate morphology database
50 Nanoindentation tester
60 Wave dispersive spectrometer (WDS)/Energy dispersive spectrometer (EDS)
66 Composition database (composition ratio storage section)
70 Electron back-scatter diffraction (EBSD)
100 Integrated evaluation device
110 Measurement instrument link controller
120 Mechanical property distribution storage section
130 Measurement data storage section
140 Physical property data storage section
200 Post-processing section
300 Property prediction program
S230 Shape analysis and inverse analysis program
S300 Structural information
S310 Automatic image processing program
S400 Compositional information
S410 Automatic composition analysis program
S500 Re-analysis and mapping software

## Claims

1. An automatic evaluation device for alloy composition search, said automatic evaluation device comprising:
a specimen holding section which holds a measurement target specimen in a given posture;
a mechanical property distribution storage section which stores therein distribution of a mechanical property of the measurement target specimen in association with a position of an indenter mark that has been formed on the measurement target specimen by a nanoindentation tester, the mechanical property having been measured by the nanoindentation tester;
a housing section which holds at least one type of measurement instrument among measurement instruments including a wavelength-dispersive X-ray spectrometer or an energy-dispersive X-ray spectrometer that analyzes compositional elements of an alloy, a field emission-scanning electron microscope that measures a structural shape of the alloy, and an electron backscatter diffraction device that analyzes orientation distribution, texture, or crystal phase distribution of crystal grains;
a measurement instrument link controller which controls a measurement operation performed with respect to the measurement target specimen by the at least one type of measurement instrument that is attached to the housing section, among the measurement instruments including the wavelength-dispersive X-ray spectrometer or the energy-dispersive X-ray spectrometer that analyzes the compositional elements of the alloy, the field emission-scanning electron microscope that measures the structural shape of the alloy, and the electron backscatter diffraction device that analyzes the orientation distribution, texture, or crystal phase distribution of the crystal grains;
a measurement data storage section which stores therein, as measurement data that has been obtained by the measurement instruments and that pertains to the measurement target specimen, measurement data from the measurement instruments in association with the position of the indenter mark that has been formed on the measurement target specimen; and
a post-processing section which computes physical property data that corresponds to the measurement data from the measurement instruments.

2. The automatic evaluation device for alloy composition search as set forth in claim 1, wherein
the measurement target specimen is one of the following:
a compositionally graded material that has a composition ratio graded between upper and lower limit values of each of compositional elements of an alloy system which is an evaluation target;
a heat treatment temperature-graded material that has been obtained by heat-treating, in a furnace in which heat treatment temperature is distributed in a graded manner between upper and lower limit values, the compositionally graded material or, instead of the compositionally graded material, a test material which has a uniform composition;
a heat-affected member that includes a region in which a base metal is not melted but a microstructure and a property of the measurement target specimen have been changed by a welding operation or a thermal cutting operation;
an additively manufactured metal material that has been manufactured as a metal component by dissolving metal powder for a part necessary to the metal component with use of an electron beam or a fiber laser and thereafter solidifying the metal powder; and
a metal powder injection molding material that is obtained by adding a binder to fine metal powder which is a raw material, without melting the fine metal powder, and that is injection-molded into a molded body which is to be degreased and sintered so as to obtain a metal component.

3. The automatic evaluation device for alloy composition search as set forth in claim 2, wherein
the additively manufactured metal material is manufactured by one of the following:
a powder bed method in which a process of (i) melting metal powder by irradiating, with a laser beam or an electron beam, a powder bed on which the metal powder is spread and (ii) solidifying the metal powder is repeated for each layer;
a directed energy deposition method in which a manufactured article is manufactured by, while supplying powder, wire, or the like, (i) melting the powder, the wire, or the like with use of a laser or an electron beam and (ii) depositing the powder, the wire, or the like;
a fused deposition modeling method in which metal powder is put into a thermoplastic resin, a mixture of the metal powder and the thermoplastic resin is deposited while being melted by heat, and a manufactured article that has been degreased after additive manufacturing is sintered so that the metal powder is solidified; and
a binder jet method in which additive manufacturing is performed by ejecting a liquid binder from a nozzle onto metal powder and in which a process of lowering a build plate and spreading the metal powder again when ejection of the liquid binder and solidification of the metal powder are completed is repeated for each layer and, after additive manufacturing, sintering is performed in a high-temperature furnace or by a heater so that the liquid binder is removed.

4. The automatic evaluation device for alloy composition search as set forth in any one of claims 1 through 3, the automatic evaluation device further comprising
the nanoindentation tester which presses an indenter against the measurement target specimen and which measures the mechanical property on the basis of a shape of the indenter mark, wherein:
the mechanical property distribution storage section stores therein the distribution of the mechanical property in association with the position of the indenter mark that has been formed on the measurement target specimen, the mechanical property being measured by the nanoindentation tester;
the housing section holds the nanoindentation tester and the at least one type of measurement instrument among the measurement instruments including the wavelength-dispersive X-ray spectrometer or the energy-dispersive X-ray spectrometer, the field emission-scanning electron microscope, and the electron backscatter diffraction device; and
the measurement instrument link controller controls measurement operations performed with respect to the measurement target specimen by the nanoindentation tester and the at least one type of measurement instrument among the measurement instruments including the wavelength-dispersive X-ray spectrometer or the energy-dispersive X-ray spectrometer, the field emission-scanning electron microscope, and the electron backscatter diffraction device, the nanoindentation tester and the at least one type of measurement instrument being attached to the housing section.

5. The automatic evaluation device for alloy composition search as set forth in claim 2 or 3, wherein
a target of alloy composition search is at least one selected from the group consisting of the compositionally graded material, the heat treatment temperature-graded material, the heat-affected member, the additively manufactured metal material, and the metal powder injection molding material, and
in the measurement data storage section, the measurement data that pertains to the measurement target specimen is at least one type of:
crystal phase equilibrium composition data that corresponds to the compositional elements of the alloy;
fine precipitate identification data and indentation shape high-speed obtainment data that correspond to the structural shape of the alloy;
polycrystal orientation data that corresponds to an anisotropy of the alloy; and
load and displacement information that corresponds to the mechanical property which is measured by the nanoindentation tester.

6. The automatic evaluation device for alloy composition search as set forth in claim 5, wherein
the target of the alloy composition search is a nickel-based superalloy, and
in the measurement data storage section, the measurement data that pertains to the measurement target specimen is at least one type of:
γ/γ' equilibrium composition data that corresponds to the compositional elements of the alloy;
the fine precipitate identification data and the indentation shape high-speed obtainment data that correspond to the structural shape of the alloy;
the polycrystal orientation data that corresponds to the anisotropy of the alloy; and
the load and displacement information that corresponds to the mechanical property that is measured by the nanoindentation tester.

7. The automatic evaluation device for alloy composition search as set forth in claim 5, wherein
in the post-processing section, the physical property data that corresponds to the measurement data from the measurement instruments is
composition data that corresponds to the crystal phase equilibrium composition data,
precipitate morphology data that corresponds to the fine precipitate identification data, or
data that is obtained by (i) reading at least one type of the indentation shape high-speed obtainment data, the polycrystal orientation data, and the load and displacement information and (ii) computing at least one type of an elastic constant, critical resolved shear stress (CRSS), a work hardening coefficient, and a creep deformation rate.

8. The automatic evaluation device for alloy composition search as set forth in claim 6, wherein
in the post-processing section, the physical property data that corresponds to the measurement data from the measurement instruments is
composition data that corresponds to the γ/γ' equilibrium composition data,
precipitate morphology data that corresponds to the fine precipitate identification data, or
data that is obtained by (i) reading at least one type of the indentation shape high-speed obtainment data, the polycrystal orientation data, and the load and displacement information and (ii) computing at least one type of an elastic constant, critical resolved shear stress (CRSS), a work hardening coefficient, and a creep deformation rate.

9. The automatic evaluation device for alloy composition search as set forth in any one of claims 2, 3, and 5 through 8, wherein:
the measurement target specimen is the heat treatment temperature-graded material that has been obtained by heat-treating, in the furnace in which the heat treatment temperature is distributed in the graded manner between the upper and lower limit values, the compositionally graded material or, instead of the compositionally graded material, the test material which has the uniform composition; and
the position of the indenter mark that has been formed on the measurement target specimen is associated with the heat treatment temperature.

10. The automatic evaluation device for alloy composition search as set forth in any one of claims 1 through 9, wherein the structural shape of the alloy indicates a phase transformation boundary region in which a crystal structure changes between a first crystal structure and a second crystal structure.

11. The automatic evaluation device for alloy composition search as set forth in claim 10, wherein the first crystal structure is a face-centered cubic lattice, and the second crystal structure is a hexagonal close-packed lattice.

12. The automatic evaluation device for alloy composition search as set forth in claim 10, wherein a composition ratio of the compositional elements changes at a boundary line between the first crystal structure and the second crystal structure.

13. The automatic evaluation device for alloy composition search as set forth in claim 10, wherein the mechanical property that is measured by the nanoindentation tester indicates a change in the mechanical property across a boundary line between the first crystal structure and the second crystal structure.

14. The automatic evaluation device for alloy composition search as set forth in claim 13, wherein the mechanical property is hardness.

15. The automatic evaluation device for alloy composition search as set forth in claim 9, wherein:
the measurement target specimen has a composition range in which a γ/γ' two-phase structure is comprehensively covered; and
with respect to an observation region that is constituted by a γ/γ' two-phase structure of a nickel-based superalloy, the post-processing section extracts tie-line information that pertains to the γ/γ' two-phase structure on the basis of an elemental map that has been obtained by the electron backscatter diffraction device and distinction between a γ phase and a γ' phase that has been performed with use of the scanning electron microscope.

16. The automatic evaluation device for alloy composition search as set forth in claim 9, wherein:
the measurement target specimen is the heat treatment temperature-graded material that has been obtained by heat-treating the compositionally graded material in the furnace in which the heat treatment temperature is distributed in the graded manner between the upper and lower limit values; and
γ' precipitate particle volume fraction data is constructed by analyzing a size and an amount of γ' precipitate particles in accordance with the heat treatment temperature.

17. An automatic evaluation method for alloy composition search, said automatic evaluation method comprising:
performing scanning electron microscope observation or electron backscatter diffraction observation with respect to a measurement target specimen, and selecting a position for dynamic measurement on the basis of a structure, a phase, or a crystal structure on an obtained image;
performing a high-temperature hardness test (nanoindentation measurement) at a predetermined given temperature at the position that is on the measurement target specimen and that has been selected for the dynamic measurement;
performing indentation shape measurement with respect to the position for the dynamic measurement, and computing a high-temperature stress-strain curve of the measurement target specimen; and
associating, with data that pertains to the high-temperature stress-strain curve, the position that has been observed in the scanning electron microscope observation or the electron backscatter diffraction observation of the measurement target specimen.

18. An automatic evaluation method for alloy composition search, said automatic evaluation method comprising:
performing indentation shape measurement at a position which is on a measurement target specimen that has been subjected to a high-temperature hardness test (nanoindentation measurement) at a predetermined given temperature by a nanoindentation tester and at which an indenter mark is formed;
computing a high-temperature stress-strain curve of the measurement target specimen on the basis of a result of the indentation shape measurement;
performing scanning electron microscope observation or electron backscatter diffraction observation with respect to the measurement target specimen, and, with use of the indenter mark on the measurement target specimen on an image which has been obtained in the scanning electron microscope observation or the electron backscatter diffraction observation, selecting, as a position for dynamic measurement, a detailed position at which scanning electron microscope observation or electron backscatter diffraction observation is to be performed;
measuring a structure, a phase, or a crystal structure at the detailed position by the scanning electron microscope observation or the electron backscatter diffraction observation; and
on the basis of the structure, the phase, or the crystal structure of the indenter mark on the measurement target specimen, associating, with data which has been obtained by the dynamic measurement, the position which is on the measurement target specimen and at which the scanning electron microscope observation or the electron backscatter diffraction observation has been performed.

19. The automatic evaluation method for alloy composition search as set forth in claim 17 or 18, wherein
the measurement target specimen is one of the following:
a compositionally graded material that has a composition ratio graded between upper and lower limit values of each of compositional elements of an alloy system which is an evaluation target;
a heat treatment temperature-graded material that has been obtained by heat-treating, in a furnace in which heat treatment temperature is distributed in a graded manner between upper and lower limit values, the compositionally graded material or, instead of the compositionally graded material, a test material which has a uniform composition;
a heat-affected member that includes a region in which a base metal (such as metal or a thermoplastic material) is not melted but a microstructure and a property of the measurement target specimen have been changed by a welding operation or a thermal cutting operation;
an additively manufactured metal material that has been manufactured as a metal component by dissolving metal powder for a necessary part with use of an electron beam or a fiber laser and solidifying the metal powder; and
a metal powder injection molding material that is obtained by adding a binder to fine metal powder which is a raw material, without melting the fine metal powder, and that is injection-molded into a molded body which is to be degreased and sintered so as to obtain a metal component.

20. The automatic evaluation method for alloy composition search as set forth in claim 19, wherein
the additively manufactured metal material is manufactured by one of the following:
a powder bed method in which a process of (i) melting metal powder by irradiating, with a laser beam or an electron beam, a powder bed on which the metal powder is spread and (ii) solidifying the metal powder is repeated for each layer;
a directed energy deposition method in which a manufactured article is manufactured by, while supplying powder, wire, or the like, (i) melting the powder, the wire, or the like with use of a laser or an electron beam and (ii) depositing the powder, the wire, or the like;
a fused deposition modeling method in which metal powder is put into a thermoplastic resin, a mixture of the metal powder and the thermoplastic resin is deposited while being melted by heat, and a manufactured article that has been degreased after additive manufacturing is sintered so that the metal powder is solidified; and
a binder jet method in which additive manufacturing is performed by ejecting a liquid binder from a nozzle onto metal powder and in which a process of lowering a build plate and spreading the metal powder again when ejection of the liquid binder and solidification of the metal powder are completed is repeated for each layer and, after additive manufacturing, sintering is performed in a high-temperature furnace or by a heater so that the liquid binder is removed.

21. The automatic evaluation method for alloy composition search as set forth in claim 19, wherein:
the measurement target specimen is the heat treatment temperature-graded material that has been obtained by heat-treating, in a temperature-graded heat treatment furnace in which heat treatment temperature is distributed in a graded manner between upper and lower limit values, the compositionally graded material or, instead of the compositionally graded material, the test material which has the uniform composition; and
the heat treatment temperature is stored in a composition ratio storage section together with a composition ratio of the measurement target specimen at the position for the dynamic measurement.

22. The automatic evaluation method for alloy composition search as set forth in any one of claims 17 through 21, wherein:
structural information that pertains to the measurement target specimen is obtained with use of high-magnification scanning electron microscope observation with respect to the position for the dynamic measurement; and
the structural information includes at least one of a crystal grain size, a precipitate particle diameter, and a volume fraction.

23. The automatic evaluation method for alloy composition search as set forth in any one of claims 17 through 22, wherein:
compositional information that pertains to the measurement target specimen is obtained by measurement with respect to the position for the dynamic measurement with use of a wavelength-dispersive X-ray spectrometer or an energy-dispersive X-ray spectrometer;
the compositional information includes at least one of a composition at each set of coordinates of the measurement target specimen, a composition of a matrix phase of the measurement target specimen, and a composition of precipitates of the measurement target specimen; and
a composition ratio of compositional elements that is at the position for the dynamic measurement and that has been observed by the wavelength-dispersive X-ray spectrometer or the energy-dispersive X-ray spectrometer is stored in a composition ratio storage section.

24. The automatic evaluation method for alloy composition search as set forth in claim 19, wherein,
the measurement target specimen is the compositionally graded material, and
the compositionally graded specimen is prepared as follows:
metal plates that are respectively made of the compositional elements of the alloy system which is an evaluation target are alternately stacked;
the metal plates are temporarily joined by subjecting the metal plates to spark plasma sintering in a vacuum at a first predetermined given temperature for a first predetermined given time period in a state where the metal plates are held while being pressed at a first predetermined given stress; and
with use of a hot isostatic pressing device, a temporarily joined spark plasma sintered material obtained is subjected to diffusion heat treatment in an Ar atmosphere at a second predetermined given temperature for a second predetermined given time period in a state where the temporarily joined spark plasma sintered material is held while being pressed at a second predetermined given stress.

25. The automatic evaluation method for alloy composition search as set forth in claim 24, wherein:
the metal plates that are respectively made of the compositional elements of the alloy system which is an evaluation target are a set of three metal plates that are respectively made of a first metal element, a second metal element, and a third metal element, and the metal plate of the second metal element and the metal plate of the third metal element are respectively stacked on upper and lower sides of the metal plate of the first metal element with the metal plate of the first metal element as an intermediate layer;
the compositionally graded specimen that has been obtained by subjecting the temporarily joined spark plasma sintered material to the diffusion heat treatment is such that (i) at a first initial interface between the metal plate of the first metal element and the metal plate of the second metal element, a binary compositionally graded alloy of the first and second metal elements is generated in a direction perpendicular to the first initial interface and a second initial interface between the metal plate of the first metal element and the metal plate of the third metal element and (ii) at the second initial interface, a binary compositionally graded alloy of the first and third metal elements is generated; and
a thickness of the metal plate of the first metal element is such a thickness that a ternary compositionally graded alloy of the first, second, and third metal elements is generated between the first and second initial interfaces.

26. The automatic evaluation method for alloy composition search as set forth in claim 25, wherein:
the first metal element is Ni, the second metal element is Ta, and the third metal element is W;
the binary compositionally graded alloy of the first and second metal elements is Ni-Ta, and the binary compositionally graded alloy of the first and third metal elements is Ni-W; and
the ternary compositionally graded alloy of the first, second, and third metal elements is Ni-Ta-W.
